Europäisches Patentamt

European Patent Office

Office européen des brevets

(19)

(11) **EP 1 607 824 A2**

(12) **EUROPÄISCHE PATENTANMELDUNG**

(43) Veröffentlichungstag:
**21.12.2005 Patentblatt 2005/51**

(51) Int Cl.7: **G06F 1/00**

(21) Anmeldenummer: **05012915.4**

(22) Anmeldetag: **15.06.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **18.06.2004 DE 102004029506**

(71) Anmelder: **Circle Unlimited AG**
**22453 Hamburg (DE)**

(72) Erfinder: **Grötsch, Michael**
**22455 Hamburg (DE)**

(74) Vertreter: **Jones Day**
**Rechtsanwälte, Attorneys-at-Law,**
**Patentanwälte**
**Prinzregentenstrasse 11**
**80538 München (DE)**

(54) **Verfahren und eine Vorrichtung zur Lizenzverwaltung und Verwaltung von Ressourcen in einem Computersystem**

(57) Die Erfindung betrifft ein Verfahren und eine Vorrichtung zum Verwalten von Ressourcen in einem Computersystem und insbesondere ein universelles Lizenzmanagementsystem für alle Arten von Nutzungsrechten an Software, Texten, Bildern, Schriften, Film, Ton, usw., die in einem Computersystem verwendet werden können.

Eine Vorrichtung zum Verwalten von Ressourcen in einem Computersystem umfaßt Ressourcenerfassungsmittel (10) zum Erfassen von Information bezüglich der Nutzung von auf einem Anwendungsrechner (1) vorgesehenen Ressourcen, Datenbankmittel zum Sammeln der Ressourceinformation von Anwendungsrechnern (1) und zum Erstellen einer Ressourcendatenbank (6) über die Nutzung von auf den Anwendungsrechnern (1) installierten Ressourcen, die zumindest die erfaßte Ressourceninformation für die Anwendungsrechner (1) und den Zeitpunkt der Erfassung umfaßt, Ist-Wert-Ermittlungsmittel zum Ermitteln von Ressourceninformation für eine vorgegebene Ressource aus der Ressourcendatenbank (6) für einen vorgegebenen Auswertezeitpunkt als Ist-Wert, Soll-Wert-Berechnungsmittel zum Ermitteln eines SollWertes für die auszuwertende Ressource für den Auswertezeitpunkt anhand von zeitbezogenen Nutzungsvorgaben für Ressourcen, und Auswertemittel zum Auswerten der Ressourceninformation für die auszuwertende Ressource und den Auswertezeitpunkt durch Vergleich des Ist-Wertes mit dem Soll-Wert.

Fig. 1

**Beschreibung**

Die Erfindung betrifft ein Verfahren und eine Vorrichtung zum Verwalten von Ressourcen in einem Computersystem und insbesondere ein universelles Lizenzmanagementsystem für alle Arten von Nutzungsrechten an Software, Texten, Bildern, Schriften, Film, Ton, usw., die in einem Computersystem verwendet werden können.

Die Verwaltung und Überwachung von Ressourcen in einem komplexen, heterogenen Computersystem mit mehreren, auch unterschiedlichen Hardware- und Softwarekomponenten, die mittels eines Kommunikationsnetzwerkes miteinander verbunden sind, ist eine sehr vielschichtige Aufgabe. Für viele in dem Computersystem eingesetzte Ressourcen ist für deren Nutzung der Erwerb von Nutzungsrechten erforderlich, was eine Überwachung der mit den Nutzungsrechten in der Regel verbundenen Nutzungsvorgaben erforderlich macht.

Nutzungsrechte an Software sowie digitalen Texten, Bildern, Schriften, Film- und Ton-Aufzeichnungen u. ä. werden in vielfältigster Weise von Rechtseigentümern vergeben und von anderen Firmen erworben. Eine Vielzahl von Unternehmen haben das Problem, die Defacto-Nutzung von den oben angegebenen Rechten mit den erworbenen Rechten in Einklang zu bringen, um festzustellen, inwieweit Sie über- oder unterlizenziert sind, so daß z.B. weitere Lizenzen bezogen werden müssen. Nun prägt jedes Lizenz gebende Unternehmen unterschiedlichste Formen von Lizenzierungsmodellen aus, die in der Praxis z. Zt. weder manuell noch maschinell hinreichend oder nur mit großem Aufwand in der Nutzung überprüft werden können.

Enterprise Resource Planning (ERP)-Systeme, so auch das der SAP AG, die in vielen Unternehmen für kaufmännische und technische Prozesse eingesetzt werden, verfügen zurzeit über keine universellen Lizenzmanagement Funktionalitäten. In Ergänzung von ERP-Systemen sind spezialisierte Systemmanagement und IT Asset Managementlösungen als potentiell Daten zuliefernde Systeme erhältlich, die in jeweiligen Teilbereichen auch im Computersystem eines Unternehmens benutzte Lizenzen feststellen und überwachen können.

Große Softwarehersteller bieten Unternehmen so genannte "Compliance Checks" an, um die Einhaltung der vereinbarten Lizenzbestimmungen gegenüber den jeweiligen Anbietern zu belegen. Dieses Angebot beinhaltet eine Kombination aus technischen Verfahren und individueller Dienstleistung, die von speziell geschulten Firmen durchgeführt wird. Ein automatisiertes, zentrales Lizenzmanagement in einem Netzwerk für Lizenzen unterschiedlichster Hersteller ist bisher nicht vorhanden.

Es existiert derzeit kein automatisiertes Standardverfahren, mit dem physikalisch auf Servern und Endgeräten festgestellte Nutzungen von Ressourcen den erworbenen Rechten (Lizenzen) nachvollziehbar und vollständig gegenübergestellt werden kann. Darüber hinaus existieren insbesondere keine automatisierten, flexibel einstellbaren Zuordnungsverfahren, wie genutzte Lizenzen den vereinbarten Lizenzgrößen gegenübergestellt werden. Es fehlt auch die Möglichkeit standardmäßig ein Soll/Ist-Vergleich zu Lizenzen für einen beliebigen in der Vergangenheit liegenden Stichtag zu erstellen.

Die Aufgabe der Erfindung ist es eine automatische, zentrale und flexible Verwaltung und Überwachung von allgemeinen Ressourcen in einem komplexen Computersystem zu schaffen, wobei Nutzungsbeschränkungen in Form von Nutzungsvorgaben berücksichtigt werden und Auswertungen für verschiedene Zeitpunkte möglich sind.

Diese Aufgabe wird durch die unabhängigen Patentansprüche gelöst. Die abhängigen Ansprüche betreffen vorteilhafte Ausgestaltungen der Erfindung.

Ein Verfahren zum Verwalten von Ressourcen in einem Computersystem mit mindestens einem Anwendungsrechner sieht das Erfassen von Ressourceninformation bezüglich der Nutzung von auf einem Anwendungsrechner vorgesehenen Ressourcen vor. Die Anwendungsrechner können mittels eines Kommunikationsnetzwerks miteinander verbunden sein. Das Computernetzwerk kann die Anwendungsrechner, die auch Server für bestimmte Dienste sein können, und andere Komponenten umfassen. Bei den Ressourcen kann es sich um auf dem Anwendungsrechner installierte Hard- und/oder Softwarekomponenten handeln. Weiterhin können beliebige Betriebsmittelressourcen des Computersystems mit dem erfindungsgemäßen Verfahren verwaltet werden. Beispielsweise ist es möglich, elektronische Dokumente, digitale Bilder, digitale Filme und/oder Audiodateien zu verwalten und deren Nutzung zu überwachen. Die Erfindung ist jedoch nicht auf die Verwaltung dieser Beispiele beschränkt.

Die ermittelte Ressourceninformation umfaßt vorzugsweise auf einem Anwendungsrechner installierte Hard- und/oder Softwarekomponenten. Zur Ermittlung derartiger Ressourceninformation ist es zweckmäßig, eine Betriebssystemdatenbank, z.B. die sog. Registry auf Windows-Systemen, auszuwerten, um auf dem Anwendungsrechner installierte Hard- und/oder Softwarekomponenten zu ermitteln. Für erkannte, installiert Hard- und/oder Softwarekomponenten können auch weitere Eigenschaften, wie sie sich z.B. aus den Programmdateien ermitteln lassen, ausgewertet werden, um den Typ einer erfaßten Ressource zu ermitteln.

Die erfaßte Ressourceninformation von Anwendungsrechnern wird in einer Ressourcendatenbank gesammelt, die Information über die Nutzung von auf den Anwendungsrechnern installierten Ressourcen und den Zeitpunkt der Erfassung umfassen kann. Zur Realisierung der Ressourcendatenbank können beispielsweise geeignete Datenbanksysteme herangezogen werden.

Für einen vorgegebenen Auswertezeitpunkt können aus der Ressourcendatenbank für eine auszuwertende Ressource die entsprechenden Ressourceninformationen als Ist-Werte für die Ressource ermittelt werden. Dies kann durch einen entsprechenden Zugriff auf die Ressourcendatenbank erfolgen. Da in der Ressourcendatenbank Ressourceninformationen mit ihren jeweiligen Erfassungszeitpunkten abgespeichert sind, können Ist-Ressourcenwerte für einen beliebigen Erfassungszeitpunkt ermittelt und zur Auswertung zur Verfügung gestellt werden.

Anhand von zeitbezogenen Nutzungsvorgaben für Ressourcen, z.B. Lizenzen für einen vorgegebenen Gültigkeitszeitraum, können für die auszuwertende Ressource Soll-Werte für deren Nutzung dynamisch bestimmt werden. Zweckmäßigerweise werden einzelne Lizenzen mit ihren jeweiligen Gültigkeitszeiträumen in einer Lizenzdatenbank gespeichert. So kann ein Ressourcen-Soll-Wert, der einen maximal zulässigen Wert für die Nutzung einer Ressource angibt, für den Auswertungszeitpunkt durch eine zeitbezogene Addition der zu diesem Zeitpunkt gültigen Lizenzen bestimmt werden. Nutzungsvorgaben für Ressourcen können beispielsweise maximal zulässige Installationsanzahlen für die Ressourcen, eine maximale Anzahl von Benutzern für eine Ressource oder andersartige Beschränkung der Benutzung einer Ressource betreffen (z.B. eine maximale Anzahl von Datensätzen, die mit einer Ressource verarbeitet werden dürfen). Eine Nutzungsvorgabe kann der Beschränkung der Nutzung einer Ressource durch eine Lizenz entsprechen. Jedoch sind auch andere Nutzungsbeschränkungen für eine Ressource möglich, wie sie sich aus technischen oder organisatorischen Vorgaben ergeben können. Dabei kann eine Nutzungsvorgabe einen begrenzten Gültigkeitszeitraum aufweisen, in dem diese eine Beschränkung für die Nutzung der betroffenen Ressource vorgibt.

Die Auswertung der Ressourceninformation für die auzuwertende Ressource und den vorgegebenen Auswertezeitpunkt kann durch Vergleich des Ist-Wertes mit dem Soll-Wert der Ressource erfolgen. Auf diese Weise können für den jeweiligen Auswertezeitpunkt eine Über- oder Unterschreitung der Nutzungsvorgaben für die Ressource bestimmt werden. Beispielsweise lassen sich so einfach Über- bzw. Unterlizenzierungen für Softwarekomponenten bestimmen.

Vorzugsweise erfolgt die Erfassung von Ressourceninformationen nach dem Start eines jeweiligen Anwendungsrechners und/oder in vorgegebenen Abständen. So können die Ressourceninformationen in der Ressourcendatenbank laufend aktualisiert werden und es ergibt sich ein fortlaufendes Bild über die Ressourcennutzung in dem Computersystem.

Durch die Abfrage von Konfigurationsinformationen kann die Erfassung der Ressourceninformation gesteuert werden. Die Konfigurationsinformation kann Information über die Art und über den Zeitpunkt der zu ermittelnden Ressourceninformation umfassen. Zweckmäßigerweise wird bei einer Vielzahl von Anwendungsrechnern die Konfigurationsinformation zentral verwaltet. Da die erfaßte Ressourceninformation den Zeitpunkt ihrer Erfassung umfaßt, kann durch einen Vergleich des Erfassungszeitpunkts mit einem in der Konfigurationsinformation vorgesehenen Zeitpunkt ermittelt werden, ob eine Aktualisierung der Ressourceninformation notwendig ist. Falls der in der Konfigurationsinformation angegebene Zeitpunkt neuer als der Erfassungszeitpunkt für eine Ressource ist, wird dann die Nutzungsinformation für die Ressource aktualisiert und in die Ressourcendatenbank übertragen.

Gemäß einem bevorzugten Ausführungsbeispiel der Erfindung kann eine Befragung des Benutzers des Anwendungsrechners bezüglich einer auf dem Anwendungsrechner installierten Ressource vorgesehen sein. Durch die Befragung kann beispielsweise ermittelt werden, ob eine installierte Ressource auf einem Anwendungsrechner genutzt wird, ob der Benutzer mit dieser zufrieden ist, wie häufig eine Benutzung erfolgt, und/oder auch die Zufriedenheit mit den Antwortzeiten bei der Nutzung interner Services (z.B. Hotline). Zweckmäßigerweise wird anhand von zuvor erfaßter Information über auf dem Anwendungsrechner installierte Ressourcen ein für diesen Anwendungsrechner oder Benutzer spezifischer Benutzerfragebogen erstellt. Dies kann durch eine automatische Auswertung der erfaßten Ressourceninformation geschehen, indem beispielsweise für alle erfaßten Ressourcen des Anwendungsrechners eine Frage nach deren Nutzung in die Befragung aufgenommen wird. So können automatisch von einer zentralen Stelle im Computernetzwerk spezifische Fragebögen für die einzelnen Anwendungsrechner erzeugt und an diese übertragen werden. Der Benutzerfragebogen wird beispielsweise mittels eines konventionellen Web-Browsers auf dem Anwendungsrechner angezeigt. Die erfaßte Nutzungsinformation kann dann automatisch ausgewertet werden. So ist es beispielsweise möglich, auf Anwendungsrechnern installierte Ressourcen zu ermitteln, für die Lizenzen vorgehalten werden müssen, die jedoch von dem Benutzer des Anwendungsrechners überhaupt nicht verwendet werden.

Um festzustellen, ob eine Benutzerbefragung anhand eines automatisch erstellten Benutzerfragebogens bereits erfolgt ist, speichert der Anwendungsrechner den Zeitpunkt der letzten Benutzerbefragung und vergleicht ihn mit dem Zeitstempel des Benutzerfragebogens.

Sowohl das Erstellen und Unterhalten der Ressourcendatenbank als auch das Auswerten der Ressourceninformationen können auf dem Anwendungsrechner selbst erfolgen. Vorteilhafterweise kann die Ressourcendatenbank jedoch auf einem speziellen Erfassungsrechner vorgesehen sein. Dieser kann die Ressourceninformation von den einzelnen Anwendungsrechnern im Computernetzwerk sammeln, die Ressourcendatenbank erstellen, aktualisieren und die Ist-Werte für eine auszuwertende Ressource und einen vorgegebenen Auswertezeitpunkt ermitteln. Auf diese Weise kann eine zentrale Ressourcendatenbank für die Ressourceninformation aller Anwendungsrechner in einem Computersystem vorgesehen werden. Auf den Anwendungsrechnern findet in diesem Fall nur die Erfassung von Ressourceninformation und eine Übermittlung an die zentrale Ressourcendatenbank auf dem Erfassungsrechner statt.

Die Anwendungsrechner werden somit nicht durch die Verwaltung der Ressourcen belastet. Der Erfassungsrechner kann neben der Unterhaltung der Ressourcendatenbank auch die Auswertung der Ressourceninformation übernehmen.

Gemäß einem bevorzugten Ausführungsbeispiel der Erfindung erfolgt die Auswertung der Ressourceninformation jedoch auf einem separaten Verwaltungsrechner, der mittels eines Kommunikationsnetzwerks mit dem Anwendungsrechner und/oder dem Erfassungsrechner verbunden ist. Gemäß dieser bevorzugten Anordnung sind die Funktionen Unterhaltung der Ressourcendatenbank und Auswertung der Ressourceninformationen auf getrennte Rechner (Server) verteilt. Dies hat den Vorteil, daß der Verwaltungsrechner an ein bestehendes kaufmännisches Informationsverarbeitungssystem (z.B. der Firma SAP) angekoppelt sein kann. Vorzugsweise erfolgt die Auswertung der Ressourceninformationen durch das kaufmännische Informationsverarbeitungssystem. Von diesem getrennt kann der Erfassungsrechner die Ressourcendatenbank verwalten und die Erfassung der Ressourceninformation durch das Vorsehen von Konfigurationsdaten steuern. Zur Erhöhung der Sicherheit des Computersystems ist es weiterhin möglich, eine Firewall zwischen Erfassungsrechner und Verwaltungsrechner/kaufmännischem Informationsverwaltungssystem vorzusehen.

Zweckmäßigerweise erfolgt die Übertragung von Ressourceninformationen über ein Kommunikationsnetzwerk in einem XML-Datenformat. Dies hat den Vorteil, daß aufgrund der XML-Schnittstelle Ressourceninformation von einer Vielzahl von unterschiedlichen Erfassungskomponenten verschiedener Hersteller in der Ressourcendatenbank gesammelt werden könnten.

Vorzugsweise werden erfaßte Ressourceninformationen gefiltert, um nur Informationen bezüglich für die Auswertung interessanter Ressourcen zu erhalten. Die Filterung kann beispielsweise mittels einer Positivliste für Ressourcen erfolgen, wobei nur Information bezüglich in der Liste aufgeführter Ressourcen das Filter passieren kann (Ressourcen-White-Liste). Die Filterun kann auch mittels einer Negativliste für Ressourcen erfolgen, wobei Information bezüglich in der Ressourcen-Black-Liste vom Filter herausgefiltert wird. Durch Konfiguration des Filters können Informationen bezüglich derjenigen Ressourcen, deren Nutzung nicht verwaltet bzw. überwacht werden soll, entfernt werden. Hierbei kann es sich beispielsweise um standardmäßig auf allen Anwendungsrechnern vorhandene Hardware- oder Softwarekomponenten handeln, oder um lizenzfrei erhältliche Produkte. Die Filterung kann vor der Aufnahme der Ressourceninformation in die Ressourcendatenbank erfolgen, um den Zugang uninteressanter Informationen zur Ressourcendatenbank zu blockieren, oder bei der Auswertung von Ressourceninformationen.

Da viele Ressourcen oftmals in unterschiedlichen Varianten (Versionen, Builds) vorhanden sind, ist es zweckmäßig, die Information für erfaßte Ressourcen vorgegebenen Standardressourcen zuzuordnen. Auf diese Weise können beispielsweise verschiedene erfaßte Varianten einer Ressource einem Standard für diese Ressource zugeordnet werden, für den Nutzungsvorgaben in Form von Lizenzscheinen existieren. Diese Zuordnung erfolgt zweckmäßigerweise über einen Tabellenwerk, das die unterschiedlichen Produktvarianten erfaßt und einem Standardprodukt zuordnet. Die Standardressource kann je nach dem Detaillierungsgrad der Nutzungsvorgaben alle Varianten eines Produkts umfassen oder einzelne Varianten zusammenfassen.

Gemäß einem bevorzugten Ausführungsbeispiel der Erfindung ist die Erstellung eines Lizenzmodells für eine Ressource vorgesehen. In dem Lizenzmodell können die Nutzungsvorgaben für die Ressource abgebildet werden. Dabei werden die durch die erworbene Lizenz vorgegebenen Nutzungsbegrenzungen in dem Lizenzmodell repräsentiert. Beispielsweise kann die maximal zulässige Anzahl von Installationen oder Benutzern für eine Ressource in einem bestimmten Zeitraum (Nutzungsdauer) als Nutzungsvorgabe vorgesehen sein. Die Nutzungsvorgabe kann sich dabei auf das gesamte Computersystem oder einen vorgegebenen Teil des Computersystems (beispielsweise eine organisatorische Einheit des das Computersystem betreibenden Unternehmens) erstrecken.

Falls für eine auszuwertende Ressource mehrere Nutzungsvorgaben mit unterschiedlichen Gültigkeitszeiträumen vorgesehen sind, ist es zweckmäßig, den ermittelten Ist-Wert für die auszuwertende Ressource auf mehrere den jeweiligen Nutzungsvorgaben entsprechende Soll-Werte zu verteilen. Auf diese Weise können die ermittelten tatsächlichen Nutzungen der Ressource auf die unterschiedlichen Lizenzen verteilt werden. Hierbei ist es jedoch zweckmäßig, die Gültigkeiten der einzelnen Nutzungsvorgaben für den Auswertungszeitpunkt zu berücksichtigen bzw. nur für den Auswertezeitpunkt gültige Lizenzen heranzuziehen. Die Verteilung des ermittelten Ist-Wertes kann beispielsweise in Form einer gleichmäßigen Verteilung der ermittelten Nutzungen auf die unterschiedlichen Nutzungsvorgaben/Lizenzen erfolgen. In diesem Fall werden alle zum Auswertezeitpunkt gültigen Lizenzen gleichmäßig belastet. Weiterhin können Nutzungsvorgaben anhand ihrer Gültigkeitszeiträume gemäß einer historischen Verteilugn der ermittelten Ist-Werte berücksichtigt werden. In diesem Fall werden z.B. zuerst die ältesten Lizenzschein berücksichtigt und die entsprechenden Nutzungsvorgaben aufgefüllt, bevor jüngere Lizenzscheine bzw. Nutzungsvorgaben herangezogen werden. Durch diese Verteilungsstrategie kann die Ausnutzung der einzelnen Nutzungsvorgaben bzw. Lizenzen ermittelt und optimiert werden.

Vorzugsweise erfolgt die Auswertung der Ressourceninformation für einen vorgegebenen Teil des Computersystems, beispielsweise für Organisationselemente (z.B. Abteilungen oder Bereiche des das Computersystem betreibenden Unternehmens). Durch diese selektive Auswertung können die in einem Teil des Computersystems verwendeten Ressourcen ermittelt und deren Nutzung überwacht werden.

Falls ein ermittelter Ist-Wert für eine Ressource den zugehörigen Soll-Wert der Ressource überschreitet, können automatisch eine Reihe vorgegebener Maßnahmen anhand von spezifizierten Regeln aktiviert werden. Mögliche Maßnahmen umfassen das Absenden einer Nachricht an einen Systemverwalter, um diesen über die übermäßige Nutzung der Ressourcen zu informieren. Falls erkannt wird, daß eine große Zahl von Benutzern auf eine einzelne Ressource zugreift, kann der Systemverwalter beispielsweise weitere Ressourcen vorsehen oder zusätzliche Lizenzen beschaffen. Weiterhin ist es möglich, ein automatisches Deaktivieren eines entsprechenden Teils der Nutzungen einer überschüssigen Ressource auf einem oder mehreren Anwendungsrechnern vorzusehen, um auf eine Lizenzüberschreitung zu reagieren. Selbstverständlich sind eine Vielzahl weiterer Möglichkeiten für die automatische Reaktion auf das Feststellen einer Sollwertüber- oder -unterschreitung möglich.

In einer Vorrichtung zum Verwalten von Ressourcen in einem Computersystem gemäß der Erfindung sind Ressourcenerfassungsmittel zum Erfassen von Informationen bezüglich der Nutzung von auf einem Anwendungsrechner vorgesehenen Ressourcen vorgesehen. Weiterhin sind Datenbankmittel zum Sammeln der Ressourceninformation von Anwendungsrechnern in dem Computernetzwerk und zum Erstellen einer Ressourcendatenbank über die Nutzung von auf den Anwendungsrechnern installierten Ressourcen vorgesehen. Die Ressourcendatenbank umfaßt zumindest die erfaßte Ressourceninformation für die Anwendungsrechner und den Zeitpunkt der jeweiligen Erfassung. Ist-Wert-Ermittlungsmittel bestimmen für einen vorgegebenen Auswertezeitpunkt aus der Ressourcendatenbank für eine auszuwertende Ressource den Ist-Wert über die Nutzung der Ressource. Dieser beschreibt einen quantitativen Wert, der die tatsächliche Nutzung der Ressource zum Auswertezeitpunkt angibt. Beispielsweise beschreibt der Ist-Wert die Anzahl der Installationen einer Hardware- oder Softwarekomponente in dem Computernetzwerk. Der Ressourcen-Ist-Wert kann auch die Anzahl der angemeldeten Benutzer eines Servers oder Services oder das Ausmaß der Nutzung einer Ressource (zum Beispiel Anzahl der Datensätze, Auslastung, Anzahl der ausgedruckten Seiten, Anzahl der erstellten Kopien, etc.) betreffen.

Soll-Wert-Berechnungsmittel ermitteln für die auszuwertende Ressource und den Auswertezeitpunkt anhand von zeitbezogenen Nutzungsvorgaben einen Soll-Wert für die auszuwertende Ressource. Da Nutzungsvorgaben eine zeitliche Befristung bzw. einen zeitllichen Gültigkeitsbereich aufweisen können, ist es von Vorteil, wenn zuerst die gültigen Nutzungsvorgaben für den jeweiligen Auswertezeitpunkt bestimmt werden und dann anhand der in den gültigen Nutzungsvorgaben angegebenen Nutzungsbeschränkungen für die Ressource dynamisch ein Soll-Wert bestimmt wird. Dies kann beispielsweise durch eine Addition der Lizenzzahlen der für den Auswertezeitpunkt gültigen Lizenzen erfolgen.

Die ermittelte Ressourceninformation für die auszuwertende Ressource und den Auswertezeitpunkt wird von Auswertemitteln durch Vergleich des Ist-Werts mit dem Soll-Wert der auszuwertenden Ressource ausgewertet, um ein Unterschreiten bzw. ein Überschreiten der Nutzungsvorgaben zu ermitteln. Anhand des Vergleichs können so beispielsweise Über- bzw. Unterlizenzierungen von einzelnen Ressourcen bestimmt werden.

Die Ressourcenerfassungsmittel sind zweckmäßigerweise zum Detektieren von installierten Hardwarekomponenten, Softwarekomponenten und/oder einer Anzahl von Benutzern einer Ressource zu einem jeweiligen Erfassungszeitpunkt ausgebildet. Die Ressourcenerfassungsmittel können z.B. als Erfassungsagent, der als Computerprogramm auf dem Anwendungsrechner abläuft, ausgebildet sein. In diesem Fall wird eine Softwarekomponente auf den Anwendungsrechner vorgesehen, die installierte Ressourcen erfaßt und deren Eigenschaften ermittelt. Die Ressourcenerfassung kann jedoch auch durch andere Mittel erfolgen, die nicht als auf dem Anwendungsrechner ablaufende Software realisiert sind. Weitere Möglichkeiten zur Erfassung von Ressourcen bietet beispielsweise WMI (Windows Management Instrumentation).

Die Ressourcenerfassungsmittel können eine Zeitsteuereinheit (Timer) aufweisen, welche die Erfassung von Ressourceninformation so steuert, daß diese nach dem Start des Anwendungsrechners und/oder in vorgegebenen Abständen durchgeführt wird. Hierzu wird beispielsweise ein Timer gestartet, nach dessen Ablauf die Ressourceninformationen erfaßt werden.

Die Ressourcenerfassungsmittel können auch eine Konfigurationseinheit aufweisen, welche Konfigurationsinformationen abfragt und auswertet. Die Konfigurationsinformation kann beispielsweise von einem zentralen Server abgefragt werden. Dies ist insbesondere dann von Vorteil, wenn die Ressourcenerfassungsmittel als Softwarekomponente auf jedem einzelnen Anwendungsrechner vorgesehen sind.

Gemäß einem bevorzugten Ausführungsbeispiel der Erfindung weisen die Ressourcenerfassungsmittel Mittel zur Befragung eines Benutzers des Anwendungsrechners bezüglich einer auf dem Anwendungsrechner installierten Ressource auf. Auf diese Weise können weitere Informationen bezüglich der Nutzung von Ressourcen auf Anwendungsrechner ermittelt werden.

Vorzugsweise sind die Ist-Wert-Ermittlungsmittel derart ausgebildet, Daten der Ressourcendatenbank bezüglich ermittelter Ressourcen für einen vorgegebenen Auswertungsbereich zu ermitteln, z.B. für einen vorgegebenen Anwendungsrechner, einen vorgegebenen Benutzer, einen vorgegebenen Teil des Computernetzwerks, oder das gesamte Computernetzwerk. Dies kann durch einen entsprechenden Zugriff auf die Ressourcendatenbank erfolgen, wobei die Ressourceninformation für den vorgegebenen Auswertungsbereich der Ressourcendatenbank entnommen wird. Die Ermittlung des Ist-Werts für die auszuwertende Ressource bzw. für den vorgegebenen Auswertungsbereich erfolgt unter Berücksichtigung des vorgegebenen Auswertezeitpunkts, d.h. die entsprechende Ressourceninformation für diesen Auswertezeitpunkt wird der Ressourcendatenbank entnommen. Es ist auch möglich, für den vorgegebenen Auswertungsbereich Information über mehrere Ressourcen der Ressourcendatenbank zu entnehmen und beispielsweise Ressourcenlisten für einzelne Anwendungsrechner oder Benutzer zu erstellen.

Es ist meist von Vorteil, wenn die Ressourcendatenbank auf einem getrennten Erfassungsrechner betrieben wird, der die Ressourceninformation von den Anwendungsrechnern sammelt und die Ressourcendatenbank aktualisiert. Dies erlaubt eine zentrale Führung der Ressourcendatenbank für eine Vielzahl von Anwendungsrechnern, die möglicherweise auch unterschiedlichen Typs (PC, Server, Unix, Windows, Mainframe, etc.) sein können. Die Anwendungsrechner und der Erfassungsrechner können mit einem üblichen Kommunikationsnetzwerk, wie einem LAN oder dem Internet, verbunden sein.

Zur Erweiterung der Verwaltung von Ressourcen auf ausgedehnte, möglicherweise heterogene Netzwerke, ist es auch möglich, daß ein Zwischenrechner zum Weiterleiten von Anfragen, Nachrichten und/oder Daten zwischen den Anwendungsrechnern und dem Erfassungsrechner vorgesehen ist. Dieser Zwischenrechner kann als Proxy zwischen den in einzelnen Netzwerkabschnitten angeordneten Anwendungsrechnern und dem Erfassungsrechner dienen und ermöglicht das Sammeln von Ressourceninformationen über Netzwerkgrenzen hinaus.

Weiterhin kann ein dedizierter Verwaltungsrechner zur Auswertung der Ressourceninformation vorgesehen sein. Dieser ist zweckmäßigerweise mit dem Erfassungsrechner mittels des Kommunikationsnetzwerks verbunden. Durch das Vorsehen unterschiedlicher getrennter Rechner für die Anordnung der Datenbankmittel und der Ist-Wert-Ermittlungsmittel auf der einen Seiten sowie der Soll-Wert-Berechnungsmittel und der Auswertemittel auf der anderen Seite kann die Sicherheit in dem Computernetzwerk verbessert werden. Gemäß einer besonders bevorzugten Ausführungsform der Erfindung sind mindestens ein Anwendungsrechner, ein Erfassungsrechner und ein Verwaltungsrechner in dem Computernetzwerk vorgesehen. Dies ist besonders dann von Vorteil, wenn die Auswertemittel als SAP-Anwendung implementiert sind, da der Server, auf dem das SAP-System läuft, dann nicht mit der Erfassung der Ressourceninformation belastet wird. Auch kann durch das Vorsehen einer Firewall zwischen Erfassungsrechner und SAP-/Verwaltungsrechner die Netzwerksicherheit verbessert werden.

Vorzugsweise sind Ressourcenfiltermittel zum Filtern von Informationen über erfaßte Ressourcen vorgesehen, um nur benötigte Ressourceninformation der Auswertung zuzuführen. Die Ressourcenfiltermittel können in dem Erfassungsrechner und/oder dem Auswertungsrechner angeordnet sein.

Die Auswertemittel können eine Ressourcenzuordnungseinrichtung zum Zuordnen von Information für erfaßte Ressourcen zu vorgegebenen Standardressourcen aufweisen. Durch die Zuordnung von vielfach vorhandenen Varianten einzelner Ressourcen zu einer vorgegebenen Standardressource wird die Auswertung erleichtert, zumal üblicherweise in vielen Nutzungsvorgaben (Lizenzen) zwischen einzelnen Varianten einer Ressource nicht unterschieden wird.

Die Auswertemittel können auch eine Lizenzmodellerstellungseinrichtung zur Erstellung eines Lizenzmodells für eine Ressource aufweisen. Durch die Lizenzmodellerstellungseinrichtung kann ein Benutzer die Angaben eines Lizenzscheines bzw. einer Lizenzvereinbarung in ein entsprechendes Lizenzmodell für die lizenzierte Ressource eingeben. Hierbei können zur Erstellung eines Lizenzmodells Lizenzmodellprototypen mit vorgegebenen typischen Lizenzgrößen vorgesehen sein. Typische Lizenzgrößen bzw. Attribute einer Lizenz sind der Typ der Lizenzbindung an ein Lizenzbindungsobjekt, z.B. an einen Anwendungsrechner, einen Benutzer, ein Netzwerk, einen bestimmten Rechnertyp oder ähnliches. Ein weiteres typisches Merkmal einer Lizenz, das in einem Lizenzmodell erfaßt werden kann, ist die Lizenzdauer. Die in einem Lizenzmodell angegebene Lizensdauer entspricht dabei der Gültigkeitsdauer einer Nut zungsvorgabe. Durch das Vorsehen von Lizenzmodellprototypen mit typischen über die jeweilige Lizenzart vorgesehenen Attributen wird die Erfassung der vereinbarten Lizenzgrößen vereinfacht, da die entsprechenden Eingaben bei der Erfassung einer Lizenz mit den Vorgaben aus dem Prototypen verglichen und überprüft werden können.

Die Auswertemittel weisen zweckmäßigerweise ein Verteilungsregelwerk zur Verteilung des ermittelten Ist-Werts für eine Ressource auf mehrere unterschiedlichen Nutzungsvorgaben der Ressource entsprechende Soll-Werte auf. Je nach Anwendungsfall kann das Verteilungsregelwerk durch Angabe entsprechender Verteilungsregeln, wie gleichmäßige Verteilung oder historische Verteilung, konfiguriert und den jeweiligen Anwendungsbedingungen angepaßt werden.

Die Auswertemittel können auch eine Steuerungseinrichtung aufweisen, welche nach vorgegebenen Regeln eine Aktion auslöst, falls ein ermittelter Ist-Wert für eine Ressource den zugehörigen Soll-Wert der Ressource überschreitet. Vorzugsweise ist die Steuerungseinrichtung über definierbare Regeln flexibel konfigurierbar, so daß ein Systemadministrator oder -verwalter für die eingesetzten Ressourcen entsprechende Regeln vorgeben kann. Durch das Vorsehen der Steuerungseinrichtung können so automatisch der jeweiligen Situation entsprechende Aktionen ausgelöst werden. Selbstverständlich ist es auch möglich, eine solche Aktion auszulösen, falls ein ermittelter Ist-Wert für eine Ressource den zugehörigen Soll-Wert für einen längeren Zeitraum deutlich unterschreitet. In diesem Fall kann beispielsweise automatisch eine Nachricht generiert und an einen Verwalter des Computersystems geschickt werden, die diesen auf die erkannte Überlizenzierung hinweist. Mittels einer regelbasierten, konfigurierbaren Steuerungseinrichtung können so eine Vielzahl von Situationen bei der Verwaltung von Ressourcen automatisch erfaßt werden.

Die Erfindung ermöglicht eine universelle Verwaltung von Betriebsmittelressourcen in einem komplexen Computersystem. Sie gestattet ein neuartiges zentrales Lizenzmanagement auf Basis neu entwickelter Funktionalitäten, Datenobjekte und automatisierter Verbindungen zwischen verschiedenen Rechnern und Rechnerwelten, die es ermöglichen, jede Art von Ressource bzw. Lizenz zu verwalten und zu managen und die reale Nutzung von Lizenzen dem vereinbarten Lizenzbestand gegenüberzustellen und daraufhin eine Über- bzw. Unterlizenzierung festzustellen.

Die Erfindung kann als Software unabhängig von evtl. vorhandenen betriebswirtschaftlichen Basisfunktionen eines vorhandenen ERP-Systems implementiert werden und ist vollautomatisch ablauffähig. Die Erfindung ergänzt Funktionalitäten vorhandener technischer Systeme und ERP-Systeme und verbindet diese miteinander.

Die Ermittlung von vorhandenen Gerätschaften und Softwareinstallationen innerhalb eines Netzwerkes kann über automatisierte Detection-Tool(s) vorgenommen werden. In Ergänzung zur automatisierten Software-Detection im Hintergrund-Betrieb von PC's und Servern kann gemäß der Erfindung eine automatisierte Nutzerbefragung durchgeführt werden.

Eine besondere Eigenschaft eines Ausführungsbeispiels der Erfindung besteht darin, die ermittelnden Ressourcen vorhandenen, vertraglich vereinbarten Lizenzen zuzuordnen. Hierzu ist es vorgesehen, die Lizenzverträge, einzelne Lizenzscheine, vereinbarte Lizenzgrößen u.ä. in einer strukturierten Datenbasis abzulegen. Hierzu können entsprechende Datenobjekte und Funktionalitäten vorgesehen sein.

Der vereinbarten maximalen Nutzung einer Ressource (Soll-Situation) ist die Ist-Situation, der aus den o.a. Detection-Tools ermittelten Softwarelizenz-Kombinationen, gegenüberzustellen. Im Abgleich zwischen Soll- und Ist-Situation kann die Über- oder Unterdeckung an Lizenzen ermittelt und Lizenzüberhänge gezielt anderen nachfragenden Benutzern oder Bereichen des Unternehmens zur Verfügung gestellt werden.

Weitere vorteilhafte Wirkungen und Merkmale der vorliegenden Erfindung ergeben sich aus der folgenden Beschreibung bevorzugter Ausführungsbeispiele anhand der beigefügten Zeichnungen, wobei

Fig. 1 schematisch eine Vorrichtung zur Ressourcenverwaltung gemäß einem Ausführungsbeispiel der Erfindung zeigt;

Fig. 2 schematisch den Programmablauf für einen Erfassungsagenten gemäß einem Ausführungsbeispiel darstellt;

Fig. 3 schematisch die Architektur und Funktionalität eines Erfassungsrechners gemäß eines Ausführungsbeispiels erläutert;

Fig. 4 schematisch eine mögliche Anordnung der Komponenten eines Ausführungsbeispiels der vorliegenden Erfindung erläutert;

Fig. 5 schematisch die Architektur eines Zwischenrechners gemäß einem Ausführungsbeispiel dargestellt;

Fig. 6 schematisch eine weitere Anordnung der Komponenten eines Ausführungsbeispiels der vorliegenden Erfindung darstellt;

Fig. 7 schematisch die von einem Verwaltungsrechner gemäß eines Ausführungsbeispiels der vorliegenden Erfindung zur Verfügung gestellten Funktionen erläutert; und

Fig. 8 ein Beispiel zu Erläuterung der zeitlichen Entwicklungen von Soll- und Ist-Werten für die Ressourcennutzung darstellt.

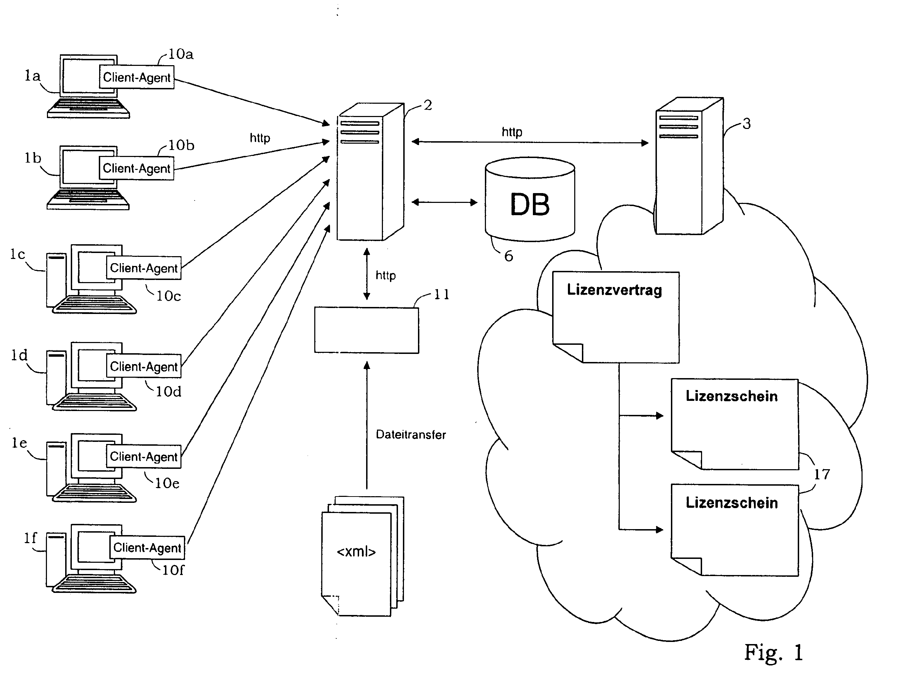

Ein Ziel der vorliegenden Erfindung besteht in der automatischen Gegenüberstellung von detektierten Hardware- und/oder SoftwareKomponenten auf verschiedenen Rechnern und Rechnertypen und einem lizenzierten Softwarebestand zur Ermittlung der Lizenzauslastung (Über-/Unterlizenzierung). Hierzu wird ein Verfahren und eine Vorrichtung zur automatisierten Detektierung von auf Computern installierten Software-Produkten und Hardware-Komponenten, deren Sammlung, historische Verwaltung und Bereitstellung über definierte Schnittstellen zur Verarbeitung und Auswertung vorgeschlagen, die im Folgenden unter Bezugnahme auf Fig. 1 beschrieben werden.

Auf jedem zu überwachenden Endgerät 1 wird ein Erfassungsagent (Detection-Agent) 10 installiert, der automatisch in regelmäßigen Zeitabständen die notwendigen Daten zu den installierten Software-Produkten und Hardware-Komponenten feststellt und über http-Protokoll an den Erfassungsrechner 2 (Detection-Server) bzw. einen Zwischenrechner 5 (Detection-Extension-Server) meldet. Die Detection-Agents 10a - 10f sind zentral von dem Detection-Server 2 aus konfigurierbar. Beim Start des Erfassungsagenten 10 bzw. in definierten Zeitintervallen (z.B. einmal pro Tag) werden die aktuellen Konfigurationsdaten vom Detection-Server 2 abgefragt.

Der Detection-Server 2 (z.B. das Produkt cuDetect der Anmelderin) ist die zentrale Instanz. Er nimmt die Daten der Detection-Agents 10a - 10f entgegen und verwaltet sie in einer Ressourcendatenbank 6. Ebenfalls wird von ihm die Konfiguration der Detection-Agents 10a - 10f bereitgestellt, welche die Agenten 10a - 10f auf den Endgeräten 1a - 1f in definierten Zeitintervallen automatisch abfragen. Die Administration des Detection-Servers 2 wird über eine Administrationseinrichtung 11 (Admin-Tool) vorgenommen.

Der Detection-Server 2 hat eine Query-Schnittstelle, über die der Verwaltungsrechner 3 Ressourceninformation (Detection-Ergebnisse) und andere Daten per http-Request abfragen kann. Über eine weitere Schnittstelle können XML-Dateien mit Erfassungsergebnissen von beliebigen Software-Detection-Tools über das Admin-Tool 11 aus dem Dateisystem importiert werden.

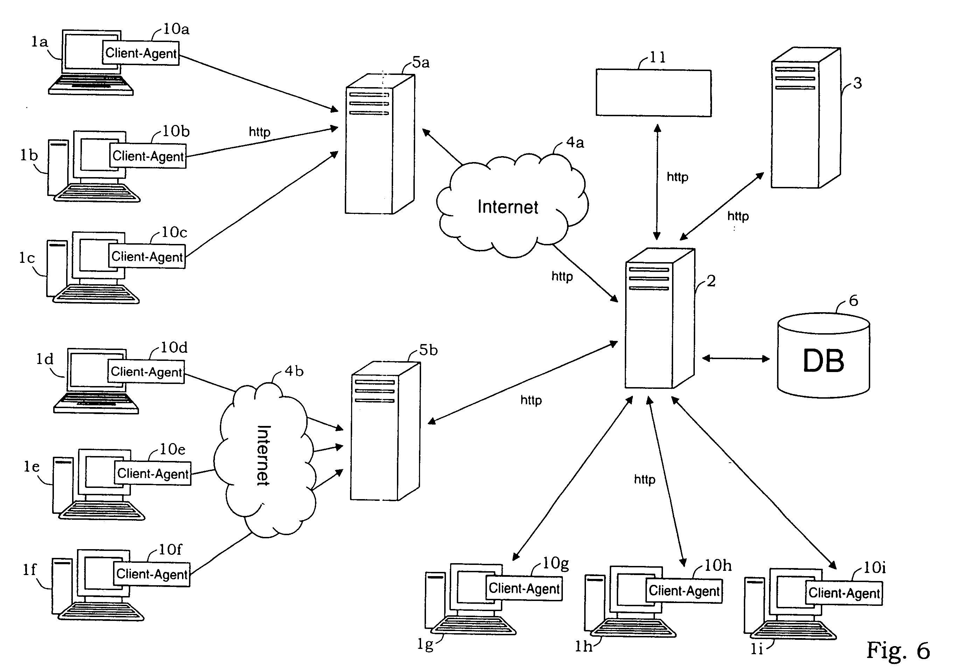

Ein oder mehrere Zwischenrechner 5a, 5b (Detection-Extension-Server) können benutzt werden, wenn Endgeräte 1 aus verschiedenen Rechnemetzen 4a, 4b überwacht werden sollen. Die Detection-Agents 10 auf den Endgeräten 1 kommunizieren dann mit dem jeweiligen Detection-Extension-Server 5a, 5b, statt direkt mit dem Detection-Server 2. Die Detection-Extension-Server 5a, 5b leiten alle Daten an den zentralen Detection-Server 2 weiter und umgekehrt (siehe Fig. 6).

Der Verwaltungsrechner 3 besitzt eine Lizenzverwaltungs-Instanz (z.B. das Produkt cuLicense der Anmelderin), übernimmt die Verwaltung von Lizenzvereinbarungen und fragt in bestimmten Zeitintervallen automatisch oder nach einer Benutzeraktion die aktuellen Daten per http-Request über die Query-Schnittstelle am Detection-Server 2 ab.

Die ermittelten Einzeldaten zu verwendeten Softwareinstallationen können gemäß definierten Regeln zu Produkt-Familien, -Bundles u.ä. verdichtet werden. Durch Verteilungsregeln (z.B. Up- und Downgrade-Berechtigungen,...) werden die festgestellten Installationsdaten den Lizenzscheinen 17 zugeordnet, wodurch Über- bzw. Unterdeckungen ermittelt werden können.

Die Aufgabe der Ressourcenerfassungsmittel bzw. eines Erfassungsagenten 10 ist die automatische Ermittlung von Information bezüglich installierter Software und Hardware auf einem Endgerät 1. Der automatische Erfassungsvorgang ist über ein Zeitintervall steuerbar und kann beispielsweise als "Windows-Service" in den Windows-Versionen NT4, 2000, XP, 2003 realisiert werden. In früheren Versionen, wie Windows 95 und 98, kann er als "Autostart-Applikation" realisiert werden.

Eine Möglichkeit zur Ermittlung von installierten Ressourcen ist die Analyse der Registry (o.ä. auf nicht Windows-Systemen). Auf Windowsbasierenden Systemen können folgende Pfade der Registry untersucht und zur Ermittlung der Installierten Software-Produkte herangezogen werden:

```
HKEY_LOCAL_MACHINE\SOFTWARE\Microsoft\Windows\CurrentVersio n\Uninstall
HKEY_CURRENT_USER\SOFTWARE\Microsoft\Windows\CurrentVersion \Uninstall
HKEY_CLASSES_ROOT\CLSID
HKEY_LOCAL_MACHINE\SOFTWARE\Microsoft\Windows\CurrentVersio n\AppPaths
```

Jede installierte Anwendung hinterlegt Anwendungsinformationen (wie Softwarename, Installationspfad,...) im "Uninstall"-Pfad der Registry.

Darüber hinaus kann in den meisten Fällen über Referenzen aus dem "App Path"-Pfad der Registry der Ort der Anwendung im Dateisystem ermittelt werden. Zu einigen Software-Produkten kann zusätzlich über den CLSID-Registry-Pfad die Class-ID (CLSID, d.h. ein eindeutiger, die Anwendung identifizierender Schlüssel) ermittelt werden.

Weiterhin kann durch ein Auslesen der Anwendungseigenschaften (wenn vorhanden und möglich) weitere Ressourceninformation ermittelt werden. Wenn die ausführbare (Haupt-)Programmdatei (Exe-File) zu einem Software-Produkt ermittelt werden kann, können zusätzliche Informationen aus den Dateieigenschaften extrahiert (wie Hersteller, Release, Version,... ; sofern vorhanden/gepflegt) und ausgewertet werden.

Eine weitere Möglichkeit zur Gewinnung von Information bezüglich der Nutzung von Ressourcen besteht in einer Benutzerbefragung (Software-Rating). Vom Detection-Server 2 aus initiiert, kann über die Detection-Agents 10 eine Benutzerbefragung bspw. zur Nutzungshäufigkeit der installierten Software durchgeführt werden. Dabei kann der Benutzer u.a. bewerten, ob er ein Software-Produkt nie, selten oder oft nutzt. Zusätzlich können selbst definierte Werte erfragt werden, die zur späteren Auswertung bereitgestellt werden.

Die Benutzerbefragung kann über ein dynamisch vom Detection-Server 2 generiertes HTML-Dokument, das im lokalen Webbrowser des Anwendungsrechners 1 oder in einem agenteneigenen Programmfenster angezeigt wird, realisiert werden. Beim Start des Agenten 10 auf dem Endgerät 1 und/oder in regelmäßigen Zeitabständen werden die Konfigurationsdaten vom Detection-Server 2 abgefragt. Diese beinhalten einen Zeitstempel zur Kennzeichnung, ob eine Benutzerbefragung durchgeführt werden soll. Stimmt der abgerufene Zeitstempel nicht mit dem lokal auf dem Endgerät gespeicherten Zeitstempel der letzten Benutzerbefragung überein, wird die Benutzerbefragung vom Detection-Server 2 abgerufen und angezeigt/durchgeführt. Danach wird der Zeitstempel der Benutzerbefragung auf dem Endgerät 1 gespeichert.

Vorteilhafterweise sind die Erfassungsagenten 10 vom Detection-Server 2 fernkonfigurierbar. Beim Start des Detection-Agenten 10 und/oder in definierten Zeitintervallen werden die aktuellen Konfigurationsdaten vom Detection-Server 2 abgerufen und lokal in der Registry des Endgeräts 1 vorgehalten.

Eine weitere Möglichkeit zur Erfassung von Ressourceninformation am Endgerät 1 ist WMI (Windows Management Instrumentation). Auf Endgeräten mit Windows-Betriebssystem (in den Versionen NT4, 2000, XP, 2003 und Microsoft PocketPC-Betriebssysteme mit WMI-Unterstützung) können über die WMI-Schittstelle Hardware-Informationen ermittelt und ausgewertet werden. WMI ist eine von Microsoft nach dem Web Based Enterprise Management (WBEM)-Standard implementierte. Schnittstellenkomponente und basiert auf COM und DCOM. Über die WMI-Schnittstelle kann auf standardisiertem Weg (unabhängig vom der installierten Windows-Version auf dem Endgerät) über TCP/IP und SNMP auf die Systeminformationen von lokalen und entfernten Endgeräten 1 zugegriffen werden (sofern sie eine WMI-Schnittstelle haben). Windows 2000, ME, XP und .NET Server enthalten standardmäßig die WMI-Schittstelle, für NT 4.0 und Windows 9x kann sie zusätzlich installiert werden.

Der Detection-Agent 10 verfügt über eine HTTP-Client-Schnittstelle, über die folgende Befehle an den Detection-Server 2 gesendet werden können:

| Befehl | Beschreibung |
| --- | --- |
| GetConfigData | Anforderung der Konfigurationsdaten für den Detection-Agent vom Detection-Server. |
| SaveDetectionData | Sendet das Ergebnis der Soft- und Hardware-Detection als XML an den Detection-Server zur Speicherung/Weiterverarbeitung. |
| RateSoftware | Fordert ein HTML-Dokument mit der Software-Bewertungsfunktionalität vom Detection-Server an. |

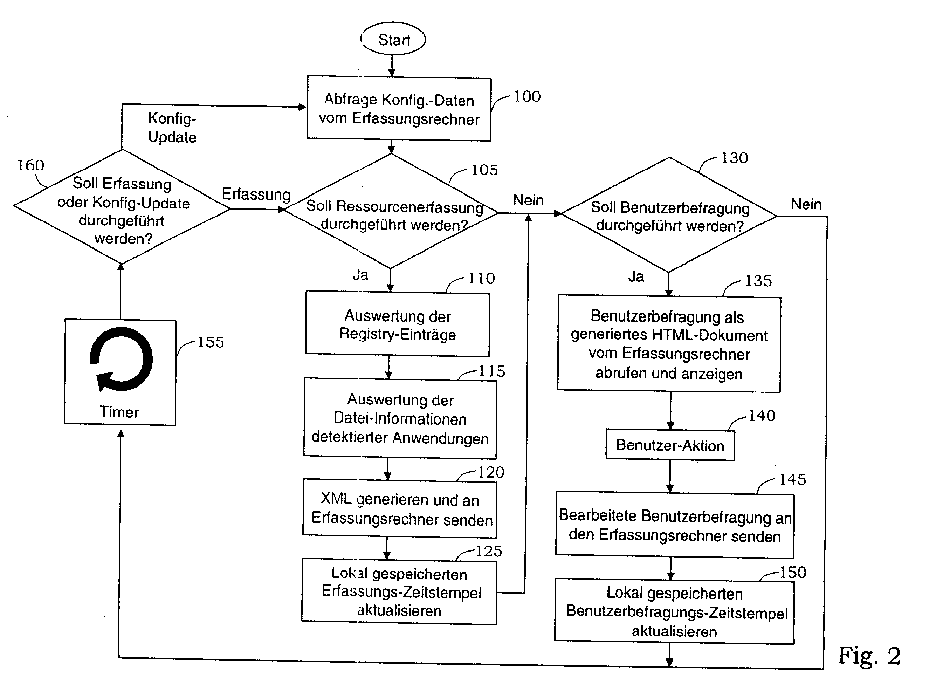

Der Programmablauf für einen Erfassungsagenten 10 gemäß einem Ausführungsbeispiel ist in Fig. 2 schematisch dargestellt. Der Verarbeitungsvorgang in einem Ressourcenerfassungsagenten 10 beginnt nach dem Start des Agenten 10 mit der Abfrage von Konfigurationsdaten vom Erfassungsrechner 2 in Schritt 100. In Schritt 105 wird anhand der abgefragten Konfigurationsdaten festgestellt, ob eine Ressourcenerfassung durchgeführt werden soll. Hierzu wird ein in den Konfigurationsdaten angegebener Zeitpunkt mit einem abgespeicherten Zeitstempel für die letzte Erfassung von Ressourceninformationen verglichen und festgestellt, ob für den in den Konfigurationsdaten angegebenen Zeitpunkt bereits eine Erfassung ausgeführt wurde.

Falls für diesen Zeitpunkt noch keine Erfassung von Ressourceninformationen vorliegt, werden im Schritt 110 die Registry-Einträge (in einem Windows-System) ausgewertet. Auf diese Weise lassen sich in dem Anwendungsrechner 1 registrierte Anwendungen ermitteln. Deren Eigenschaften werden in Schritt 115 durch eine Auswertung der Dateiinformationen der zugehörigen Programmdatei ermittelt. Anhand der erfaßten Daten werden in Schritt 120 Ressourceninformationseinträge in XML generiert und an den Erfassungsrechner 2 übermittelt. Der auf dem Anwendungsrechner 1 lokal gespeicherte Zeitstempel für die letzte Ressourcenerfassung wird anschließend in Schritt 125 aktualisiert.

Falls keine Ressourcenerfassung durchgeführt werden soll oder diese bereits abgeschlossen ist, wird in Schritt 130 ermittelt, ob eine Benutzerbefragung durchgeführt werden soll. Hierzu wird eine in den Konfigurationsdaten vorgesehene Zeitinformation mit einem Zeitstempel der zuletzt durchgeführten Benutzerbefragung verglichen. Falls die Zeitinformation in den Konfigurationsdaten neuer ist als der Benutzerbefragungszeitstempel, wird im Schritt 135 ein entsprechendes, vom Erfassungsrechner 2 generiertes HTML-Dokument abgerufen und auf dem Anwendungsrechner 1 angezeigt. In Schritt 140 werden die vom Benutzer eingegebenen Daten erfaßt und in Schritt 145 ausgewertet und an den Erfassungsrechner 2 gesendet. Die erfaßten Daten können sich sowohl auf die Nutzung von einzelnen Ressourcen durch den Benutzer des Anwendungsrechners 1 beziehen, als auch weitere Informationen bezüglich der einzelnen Ressourcen vom Benutzer abfragen. So können beispielsweise Daten über die Zufriedenheit des Benutzers über einzelne Ressourcen oder Antwortzeiten, z.B. von angebotenen Services wie Hotlines, ermittelt werden. In Schritt 150 wird der auf dem Anwendungsrechner 1 gespeicherte Zeitstempel für die Benutzerbefragung aktualisiert.

In Schritt 155 wird ein Timer für eine vorgegebene Zeitdauer gestartet für die der Erfassungsagent 10 dann inaktiv ist. Nach Ablauf dieser Zeitdauer wird in Schritt 160 anhand der Konfigurationsdaten ermittelt, ob eine neue Erfassung von Ressourceninformationen durchgeführt werden soll (weiter zu Schritt 105) oder ob eine Aktualisierung von Konfigurationsdaten notwendig ist (zurück zu Schritt 100). Dies erfolgt anhand einer Auswertung des Zeitstempels für die zuletzt durchgeführte Ressourcenerfassung bzw. die letzte durchgeführte Aktualisierung der Konfigurationsdaten.

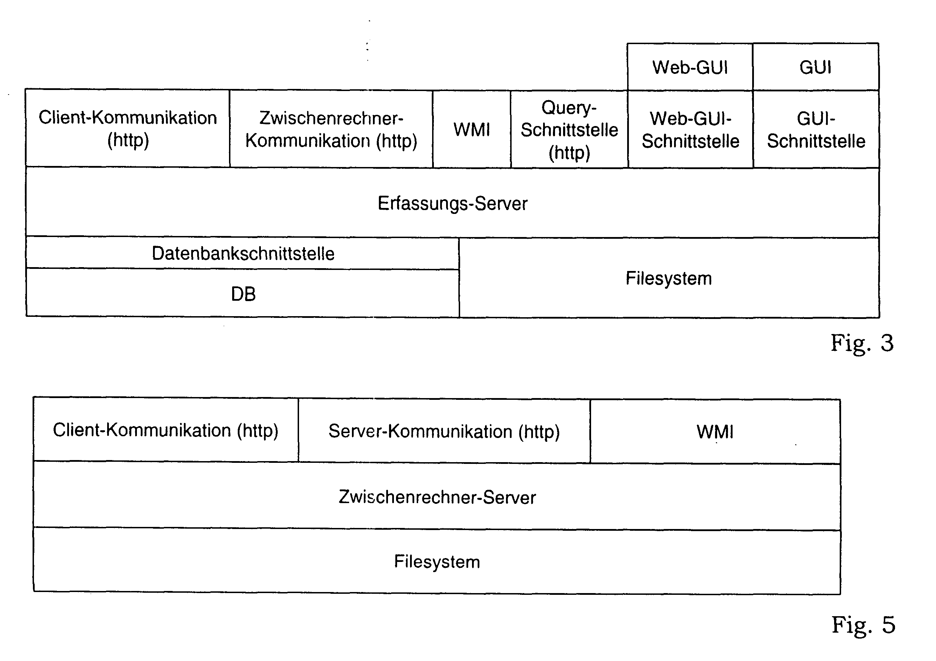

Die Architektur und Funktionalität des Erfassungsrechners 2 wird nun unter Bezugnahme auf Fig. 3 erläutert. Die Aufgabe des Erfassungsrechners 2 ist die Sammlung, Verwaltung und Bereitstellung von Ressourceninformationen aus Erfassungs-Ergebnisdaten sowie die Fernkonfiguration von Erfassungsagenten 10. Der Erfassungsrechner 2 kann selbst über eine spezielle Schnittstelle von einer Administrationseinrichtung (Admintool) 11 administriert werden.

Der Erfassungsrechner 2 kann Filter für erfaßte Ressourceninformation aufweisen. Die Filter können z.B. in Form einer sogenannten Software-Black/White-Liste zum Ausschluß bzw. zur Selektion von bestimmten Softwareprodukten aus den übermittelten Ergebnissen der Softwareerfassung ausgebildet sein. Es ist auch möglich, eine sogenannte Computer-Black/White-Liste zum Ausschluß bzw. zur Selektion von übermittelten Ergebnissen von bestimmten Anwendungsrechnern vorzusehen. Die Einträge dieser Listen können in einer entsprechenden Datenbanktabelle vorgehalten werden. Durch diese Filterung können gezielt einzelne Ressourcen zur weiteren Auswertung ausgewählt werden. Die Bereitstellung der Daten für die Auswertung der Ressourceninformation erfolgt über eine Query-Schnittstelle, vorzugsweise im XML-Format.

Da an Endgeräten mit Windows-Betriebssystem die Erfassung von Software- und/oder Hardwareinformation auch über WMI (Windows Management Instrumentation) erfolgen kann, kann der Erfassungsrechner 2 auch eine entsprechende Schnittstelle zum Zugriff per WMI aufweisen.

Die möglichen Schnittstellen des Erfassungsrechners 2 sind in folgender Tabelle dargestellt.

| Schnittstelle | Beschreibung | Protokoll |
|---|---|---|
| Client-Kommunikation | Kommunikation mit den Detection-Agents | TCP/IP (http) |
| Extension-Server-Kommunikation | Kommunikation mit Detection-Extension-Servers | TCP/IP (http) |
| WMI | Ermittlung von Software- und Hardware-Informationen über WMI | TCP/IP (RPC,...) |
| Query | Abfrage von (aufbereiteten) Detection-Daten (z.B. von cuLicense) | TCP/IP (http) |
| Web-Gui | Schnittstelle, über die der Detection-Server von einem Internet-Browser aus administriert werden kann, bzw. Auswertungen abgerufen werden können | TCP/IP (http) |
| Gui | Schnittstelle, über die der Detection-Server von der Administrations-Applikation aus administriert werden kann, bzw. Auswertungen abgerufen werden können | TCP/IP (http) |

Über die http-Schnittstellen (Serverseite) des Erfassungsrechners 2 können Befehle interpretiert werden. Die Befehle für die Kommunikation mit dem Erfassungsagenten 10 (Client-Kommunikationsschnittstelle) sind in folgender Tabelle zusammengefaßt.

| Befehl | Beschreibung |
|---|---|
| GetConfigData | Anforderung der Konfigurationsdaten für den Detection-Agent vom Detection-Server. |
| SaveDetectionData | Sendet das Ergebnis der Soft- und Hardware-Detection als XML an den Detection-Server zur Speicherung/Weiterverarbeitung. |
| RateSoftware | Fordert ein HTML-Dokument mit der Software-Bewertungsfunktionalität vom Detection-Server an. |

Allgemeine Befehle für die Kommunikation mit dem Zwischenrechner 5, der Server/Client-Kommunikationsschnittstelle, und der Query- und (Web-)GUI-Schnittstelle sind in folgender Tabelle aufgeführt.

| Befehl | Beschreibung |
|---|---|
| ServerInfo | Gibt Informationen über den Detection-Server/-Extension-Server aus. Kann zum Verbindungstest genutzt werden. |

Befehle für die Datenauswertung (Query-Schnittstelle) sind in folgender Tabelle zusammengestellt.

| Befehl | Beschreibung |
|---|---|
| GetProductList | Gibt eine Liste aller zum übergebenen Zeitpunkt erkannten Software-Produkte als XML zurück. |
| GetComputerList | Gibt eine Liste aller zum übergebenen Zeitpunkt erkannten Rechnernamen als XML zurück. |
| GetUserList | Gibt eine Liste aller zum übergebenen Zeitpunkt erkannten Benutzer als XML zurück. |
| GetComputerUserList | Gibt eine Liste aller zum übergebenen Zeitpunkt erkannten Benutzer mit Zuordnung zum Computer als XML zurück. |
| GetSoftwareForComputer | Gibt eine Liste der auf einem bestimmten Computer zum übergebenen Zeitpunkt erkannten Software-Produkte als XML zurück. |
| GetSoftwareForUser | Gibt eine Liste der auf einem bestimmten Computer (auf dem der übergebenen User bei der letzten Software-Detection angemeldet war) zum übergebenen Zeitpunkt erkannten Software-Produkte als XML zurück. |
| GetSoftwareDetectionValues | Gibt eine Liste aller erkannten Software-Produkte mit einem Summenwert (auf den übergebenen Zeitpunkt bezogen) als XML zurück. |
| GetHardwareDetectionValues-ForComputer | Gibt eine Liste aller erkannten Hardwarekomponenten aus dem übergebenen PC (auf den übergebenen Zeitpunkt bezogen) als XML zurück. |
| GetSoftwareRatingResult | Gibt die Ergebnisdaten des akuellsten Softwareratings zum übergebenen PC oder Benutzer als XML zurück. |
| GetExtendedRatingResult | Gibt die Ergebnisdaten aus den selbst definierten Rating-Attributen zum übergebenen PC oder Benutzer als XML zurück. |

Befehle zur Konfiguration des Erfassungsrechners 2 über die Administrationseinrichtung 11 finden sich in der nachfolgenden Tabelle.

| Befehl | Beschreibung |
|---|---|
| ChangeData | Löschen, Ändern und Anlegen von Datensätzen gemäß des übergebenen XML-Dokuments (Datenänderungen nur an Konfigurationsdaten-Tabellen) |
| ReadData | Auslesen von Datensätzen aus Datenbanktabellen gemäß dem übergebenen XML-Dokument. |

Eine ausführliche Beschreibung aller Befehle ist im Anhang zu finden.

Der Verwaltungsrechner 3 nutzt die Query-Schnittstelle des Erfassungsrechners 2, über die per http-Anforderung mit Hilfe verschiedener Befehle Daten, Auswertungen, usw., zur Weiterverarbeitung (z.B. zur Lizenzverwaltung) abgerufen werden können. Die Query-Schnittstelle akzeptiert Standard-http-Anforderungen und liefert das gewünschte Ergebnis als XML-Struktur in der Antwort zurück. Die folgenden Befehle werden vom Erfassungsrechner 2 unterstützt.

| Befehl | Beschreibung |
|---|---|
| GetProductList | Gibt eine Liste aller zum übergebenen Zeitpunkt erkannten SoftwareProdukte als XML zurück. |
| GetComputerList | Gibt eine Liste aller zum übergebenen Zeitpunkt erkannten Rechnernamen als XML zurück. |
| GetUserList | Gibt eine Liste aller zum übergebenen Zeitpunkt erkannten Benutzer als XML zurück. |

(fortgesetzt)

| Befehl | Beschreibung |
|---|---|
| GetComputerUserList | Gibt eine Liste aller zum übergebenen Zeitpunkt erkannten Benutzer mit Zuordnung zum Computer als XML zurück. |
| GetSoftwareForComputer | Gibt eine Liste der auf einem bestimmten Computer zum übergebenen Zeitpunkt erkannten Software-Produkte als XML zurück. |
| GetSoftwareForUser | Gibt eine Liste der auf einem bestimmten Computer (auf dem der übergebenen User bei der letzten Software-Detection angemeldet war) zum übergebenen Zeitpunkt erkannten Software-Produkte als XML zurück. |
| GetSoftwareDetectionValues | Gibt eine Liste aller erkannten Software-Produkte mit einem Summenwert (auf den übergebenen Zeitpunkt bezogen) als XML zurück. |
| GetHardwareDetectionValuesForComputer | Gibt eine Liste aller erkannten Hardwarekomponenten aus dem übergebenen PC (auf den übergebenen Zeitpunkt bezogen) als XML zurück. |
| GetSoftwareRatingResult | Gibt die Ergebnisdaten des akuellsten Softwareratings zum übergebenen PC oder Benutzer als XML zurück. |
| GetExtendedRatingResult | Gibt die Ergebnisdaten aus den selbst definierten Rating-Attributen zum übergebenen PC oder Benutzer als XML zurück. |

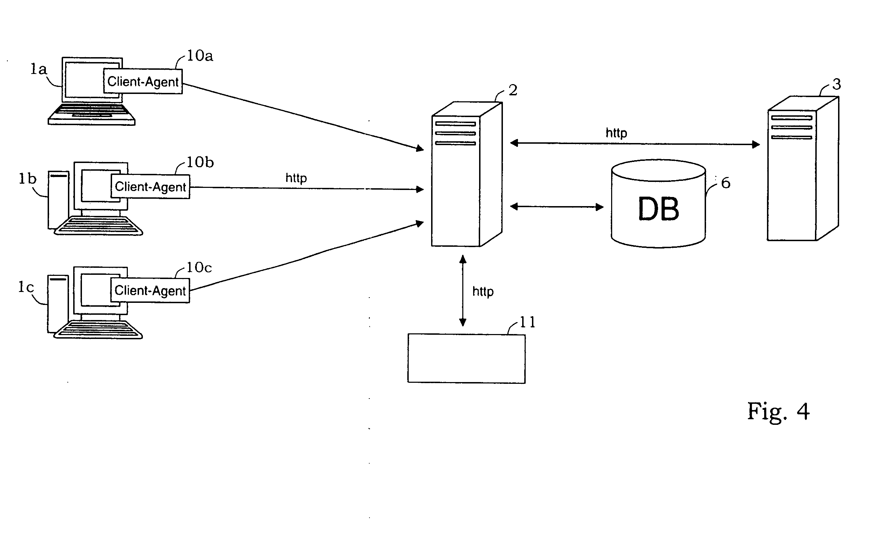

Die Fig. 4 erläutert schematisch eine mögliche Anordnung gemäß einem Ausführungsbeispiel der vorliegenden Erfindung. Gemäß dieser Anordnung melden die Ressourcenerfassungsagenten 10 die ermittelten Daten direkt an den Erfassungsrechner 2, der diese in der Datenbank 6 speichert. Der Verwaltungsrechner 3 fragt über die Query-Schnittstelle die gewünschten Daten vom Erfassungsrechner 2 ab. Die Konfiguration des Erfassungsrechners 2 erfolgt über die Administrationseinrichtung 11. Neben dieser Anordnung sind selbstverständlich auch andere Topologien möglich.

Die Administrationseinrichtung 11 dient zur Administration und Bedienung des Erfassungsrechners 2. Sie kann als Softwareapplikation (Admintool) implementiert und auf einem beliebigen Rechner ausgeführt werden. Die Kommunikation mit dem Erfassungsrechner 2 erfolgt über das http-Protokoll. Über die Administrationseinrichtung 11 können beispielsweise Benutzer angelegt und verwaltet werden. Weiterhin können Ressourceninformationen, die beispielsweise von anderen Software-Detektionssystemen erzeugt wurden, per XML-Datei importiert werden. Die Administrationseinrichtung 11 kann auch zur Verwaltung der Ressourcenfilter, insbesondere der Hardware- und Software-Blackand-White-Lists, verwendet werden. Weiterhin können mittels der Administrationseinrichtung 11 die Erfassungsagenten 10 konfiguriert werden. Hierzu ist es zweckmäßig, die Anwendungsrechner 1 verschiedenen Konfigurationsgruppen zuzuordnen. Für jede Konfigurationsgruppe können eigene Konfigurationseinstellungen für die Erfassungsagenten festgelegt und diesen zugänglich gemacht werden. Die Administrationseinrichtung 11 hat eine http-Client-Schnittstelle, über welche die folgenden Befehle an den Erfassungsrechner 2 gesendet werden können.

| Befehl | Beschreibung |
|---|---|
| ChangeData | Löschen, Ändern und Anlegen von Datensätzen gemäß des übergebenen XML-Dokuments (Datenänderungen nur an Konfigurationsdaten-Tabellen) |
| ReadData | Auslesen von Datensätzen aus Datenbanktabellen gemäß dem übergebenen XML-Dokument. |

Die Architektur des Zwischenrechners 5 gemäß einem Ausführungsbeispiel wird in Fig. 5 dargestellt. Der Zwischenrechner 5 kann gemäß der in Fig. 6 dargestellten Anordnung von Komponenten der vorliegenden Erfindung in einem Kommunikationsnetzwerk 4 zwischen Erfassungsrechner 2 und Anwendungsrechner 1 vorgesehen sein. Der Zwischenrechner 5 leitet Anfragen und Daten zwischen den Erfassungsagenten 10 und dem Erfassungsrechner 2 weiter, gegebenenfalls auch über Domain- bzw. Netzwerkgrenzen hinweg. Weiterhin kann der Zwischenrechner 5 auch zur Erfassung von Software- und Hardwareinformationen über WMI von Endgeräten mit Windows-Betriebssystemen herangezogen werden. Die Schnittstellen des Zwischenrechners sind in folgender Tabelle zusammengefaßt.

| Schnittstelle | Beschreibung | Protokoll |
|---|---|---|
| Server-Kommunikation | Kommunikation mit Detection-Server | TCP/IP (http) |
| WMI | Ermittlung von Software- und Hardware-Informationen über WMI | TCP/IP (RPC,...) |

Weiterhin kann über die http-Schnittstelle (Serverseite) folgender Befehl interpretiert werden.

| Befehl | Beschreibung |
|---|---|
| ServerInfo | Gibt Informationen über den Detection-Server/Extension-Server aus. Kann zum Verbindungstest genutzt werden. |

Alle anderen Anfragen und Antworten werden direkt an den Erfassungsrechner 2 bzw. den entsprechenden Erfassungsagenten 10 weitergeleitet. Eine ausführliche Beschreibung aller Befehle befindet sich im Anhang.

Über die in Fig. 6 dargestellten zwei Zwischenrechner 5a, 5b können Endgeräte 1 aus unterschiedlichen Rechnernetzen (auch über das Internet) mit dem Erfassungsrechner 2 kommunizieren. Der Verwaltungsrechner 3 fragt über die Query-Schnittstelle die benötigten Daten vom Erfassungsrechner 2 ab, der diese in seiner Ressourcendatenbank 6 bereitstellt. Der Erfassungsrechner 2 hat die Ressourceninformation zuvor, initiiert durch die Client-Agents 10, über die Zwischenrechner 5a, 5b erhalten.

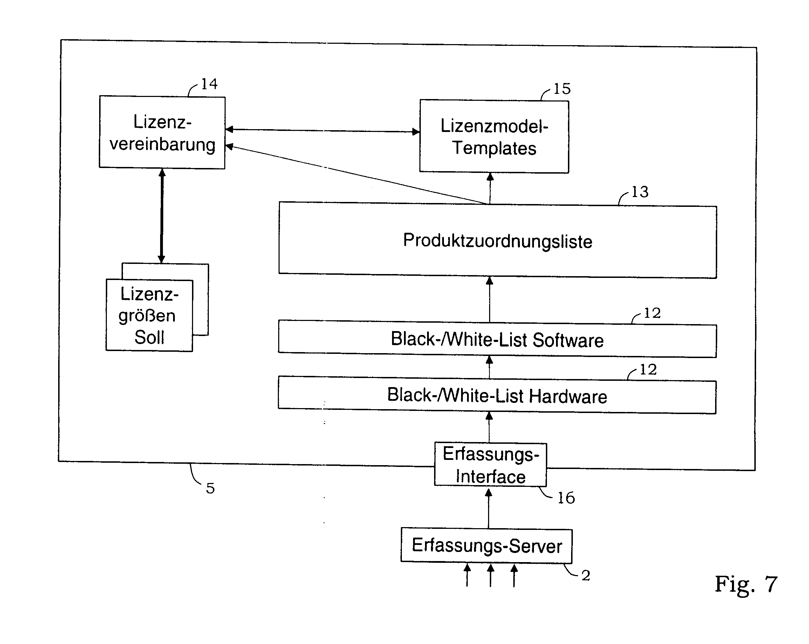

Die Fig. 7 stellt schematisch die von dem Verwaltungsrechner 3 gemäß einem Ausführungsbeispiel der vorliegenden Erfindung zur Verfügung gestellten Funktionen dar. Die von dem Erfassungsrechner 2 erfaßte Ressourceninformation für bestimmte Ressourcen wird über eine Erfassungsschnittstelle 16 abgefragt. Ressourcenfiltermittel 12 filtern die eingehende Ressourceninformation mittels Black/White-Listen für Software- und/oder Hardware, um eine gezielte Auswertung für bestimmte Benutzer, Rechner oder Ressourcen vornehmen zu können. Durch entsprechende Black-Listen können z.B. auf Rechnern vorgesehene Ressourcen ausgeblendet werden, die nicht mit der vorliegenden Erfindung verwaltet werden sollen. Eine Ressourcen-Zuordnungseinrichtung 13 dient der Zuordnung von Ressourceninformation zu vorgesehenen Standardressourcen, beispielsweise über eine Produktzuordnungsliste. Dies vereinfacht die Auswertung, da bestimmte Varianten eines Produkts, z.B. unterschiedliche Versionen, einem gemeinsamen Standardprodukt zugeordnet werden können.

Die Information bezüglich detektierter Hard- und Softwarekomponenten wird auf Anforderung von dem Erfassungsrechner 2 bereitgestellt. Da Computernetzwerke umfangreich sein können und eine Vielzahl von Ressourcen aufweisen können, besteht die Möglichkeit, daß für eine aktive Überwachung und Verwaltung der Ressourcen nicht sämtliche Ressourceninformation ausgewertet werden soll. Aus diesem Grunde ist es vorteilhaft, wenn in den Ressourcenfiltermitteln 12 Black-Listen und/oder White-Listen vorgesehen sind, über die festgelegt werden kann, welche Ressourcen (Endgeräte, Hardwarekomponenten und/oder Softwarekomponenten) ausgewertet werden sollen bzw. ausgeschlossen werden sollen.

In der Software-Positivliste werden beispielsweise typische Softwarepakete mit ihren unterschiedlichen Softwarekomponenten, Versionen und Identifikatoren (Fingerprints) abgelegt. In dieser mehrdimensionalen Stückliste wird die Essenz ermittelt, die dazu dient, zusammengefaßte Lizenzgrößen für Softwareprodukte zu ermitteln, die auch in Lizenzverträgen genannt worden sind.

Anhand von zeitbezogenen Nutzungsvorgaben für Ressourcen (Lizenzvereinbarungen) 14 werden für die auszuwertenden Ressourcen und einen vorgegebenen Auswertungszeitpunkt produktspezifische Soll-Werte für die Ressourcen ermittelt und mit den entsprechenden Ist-Werten verglichen. Anhand von Lizenzmodellprototypen 15 (Templates) mit für Lizenzvereinbarungen typischen Lizenzgrößen können einzelne Lizenzmodelle für die Ressourcen erstellt werden.

Mittels der Ressourcenzuordnungseinrichtung 13 können erfaßte Ressourcen vorgegebenen Standardressourcen zugeordnet werden. Über eine Produktzuordnungsliste wird anhand der bei der Erfassung ermittelten Attribute der Ressourcen, wie Titel, Version, CLSID (eindeutige Class-ID einer Anwendung), eine Zuordnung einer ermittelten Ressource zu einer Produktidentifikation ermöglicht. Dies ist vorteilhaft, da in Lizenzscheinen für beispielsweise Software in der Regel eine derartige Produktidentifikation aus einem Produktkatalog angegeben wird. Deshalb wird die erfaßte Information über eine Ressource mittels einer Tabelle in eine eindeutige Produktidentifikation abgebildet und so eine Verknüpfung mit einem Lizenzschein ermöglicht.

In Lizenzmodellprototypen können typische Lizenzmodelle von Herstellern von Ressourcen mit ihrer Bezeichnung, ihren wesentlichen Lizenzgrößen und ggf. benötigten Schwellwerten hinterlegt werden. Dabei können bereits vorgegebene Eckdaten und Beschränkungen berücksichtigt werden. Typische Attribute eines Lizenzmodells sind die Bindung der Lizenz an vorgegebene Bindungsobjekte, beispielsweise Rechner/CPU-Anzahl, Benutzer, Server, oder andere Betriebsgrößen. So sind z.B. bei Datenbanksystemen oder bei ERP-Systemen Beschränkungen bezüglich einer Anzahl der zu verwaltenden Datensätze üblich. Anhand der Lizenzmodell-Prototypen können einfach konkrete Lizenzmodelle 15 für bestehende Lizenzscheine oder -verträge erstellt werden, wobei nur noch die jeweiligen Daten aus dem konkreten Lizenzschein einzugeben sind. Fehlbedienungen und falsche Eingaben werden so reduziert. Anhand der erstellten Lizenzmodelle 15 kann eine Überprüfung von Lizenzverträgen und Lizenzscheinen und den dort angegebenen Lizenzgrößen erfolgen, wobei Widersprüche zwischen den Lizenzprototypen und den eingegebenen Daten der Lizenzverträge und Lizenzscheine erkannt werden können.

Ein großes Problem im Lizenzmanagement besteht üblicherweise darin, die ermittelten Ist-Werte für Ressourcen den erworbenen vertraglichen Soll-Werten (niedergelegt in den Lizenzscheinen) gegenüberzustellen. Ein Problem hierbei ist, daß die Lizenzscheine unternehmensseitig häufig gar nicht vorliegen, da sie in dem das Computernetzwerk betreibenden Unternehmen verstreut sind bzw. nicht systematisch erfaßt werden. Weiterhin stellt sich die Frage, wogegen die ermittelten Ist-Werte abgeglichen werden sollen. Hierbei gibt es mehrere Möglichkeiten für die Erfassung bzw. Verwaltung der Ist-Daten. Diese können summarisch für das gesamte Unternehmen zum aktuellen Zeitpunkt, summarisch für das Unternehmen per Stichtag (auch rückwirkend), oder summarisch per Stichtag für einzelnen Organisationseinheiten (z.B. Kostenstellen) vorhanden sein.

Für (physikalisch) ermittelte Ist-Werte, die nur summarisch je Produkt und eventuell Organisationseinheit erfaßt werden, ist gemäß der Erfindung ein flexibles Verteilungsregelwerk mit unterschiedlichen, konfigurierbaren Verteilungsstrategien für die Zuordnung der ermittelten Ist-Werte zu den Lizenzscheinen vorgesehen. Mögliche Zuordnungsstrategien sind unter anderem eine historische Verteilung und eine gleichmäßige Verteilung von Ist-Werten auf Soll-Werte. Zweckmäßigerweise können die Verteilungsstrategien den jeweiligen Gegebenheiten angepaßt werden. Beispielhafte Tabellendefinitionen für eine Repräsentation von Lizenzscheinen und einem Produktkatalog in einer Datenbank sind im Anhang aufgeführt.

Bei der historischen Verteilung werden ermittelte Ist-Werte für ein Produkt dem jeweiligen ältesten vorhandenen Lizenzschein im IST zugeordnet und dieser wird bis zur Sollgrenze zugebucht. Hierdurch wird zuerst der älteste, dann der zweitälteste und später bis zum jüngsten Lizenzschein mit Ist-Werten aufgefüllt. Zum Schluß ergibt sich eine Über- oder Unterdeckung, die weiter ausgewertet werden kann. Beispielsweise kann im Fall, daß ein ermittelter Ist-Wert einer Ressource den zugehörigen Soll-Wert der Ressource überschreitet, eine vordefinierte Aktion ausgelöst werden. Beispielsweise kann eine Nachricht an einen Systemverwalter abgesandt werden, um auf die Unterdeckung aufmerksam zu machen. Weiterhin können auch Ressourcen auf den Anwendungsrechnern deaktiviert werden, um die Einhaltung der Lizenzgrößen zu erreichen.

Eine weitere mögliche Verteilung der Ist-Werte sieht ein gleichmäßiges Auffüllen von vorhandenen Lizenzscheinen mit real genutzten Ist-Werten bis zu den jeweiligen Maximalwerten der Nutzungsvorgaben vor (gleichmäßige Verteilung).

Durch die unterschiedlichen Zuordnungsstrategien kann die Auswertung der genutzten Ressourcen in dem Computernetzwerk der jeweiligen Kostenverteilungs- bzw. -verrechnungssituation in dem Unternehmen angepaßt werden. Weiterhin ist es möglich, eine stichtagsbezogene Auswertung der Ressourcen-Nutzungssituation zu beliebigen Zeitpunkten durchzuführen, um eine Übereinstimmung der Ressourcennutzung mit den Nutzungsvorgaben zu prüfen (Compliance Check). Die stichtagsbezogene Auswertung für einen Compliance Check wird gemäß der Erfindung dadurch unterstützt, daß zu den Produkten (in der Produktgrößentabelle) jeweils zeitliche Meßgrößen als Zeitreihen verwaltet werden, so daß für jedes einzelne Produkt zu beliebigen Zeitpunkten stichtagsbezogene Ist-Werte hinterlegt werden können. Bei der Auswertung können dann stichtagsbezogen die entsprechenden Summen gültiger Lizenzscheine für den Stichtag bestimmt und dem jeweiligen Ist-Wert gegenübergestellt werden. Auf diese Weise kann ermittelt werden, ob es unternehmensweit eine Über- oder Unterdeckung per Stichtag gibt.

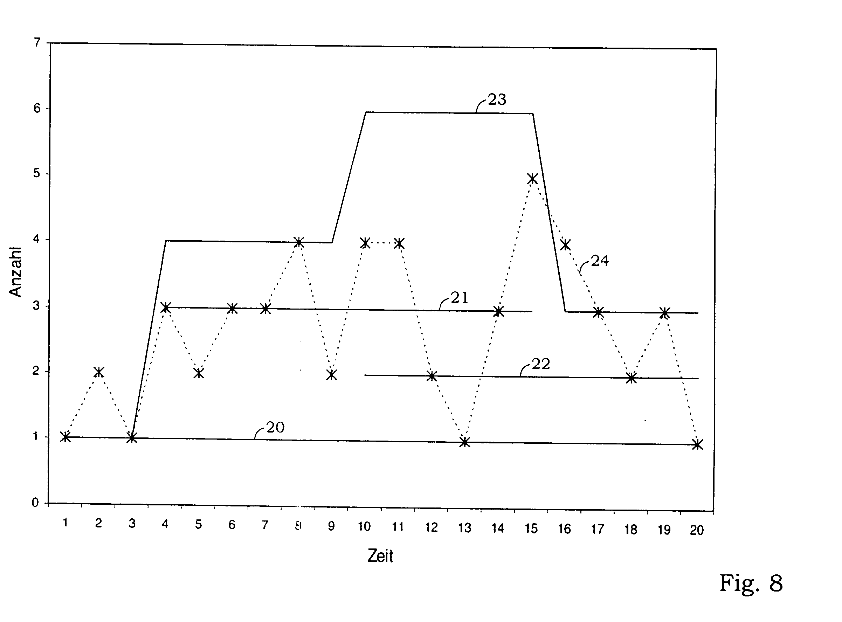

Dies wird in einem Beispiel anhand von Fig. 8 näher erläutert. Die Linien 20, 21 und 22 stellen in diesem Diagramm die Anzahl der verfügbaren Lizenzen für eine Ressource für einen bestimmten Zeitraum (1-20) dar. Die Lizenz 20 erlaubt den Betrieb einer Ressource für den gesamten dargestellten Zeitraum (1-20). Die Lizenz 21 gestattet den Betrieb von drei weiteren Nutzungen für die Ressource für den Zeitraum 4 bis 15, und die Lizenz 22 ermöglicht zwei zusätzliche Nutzungen der Ressource für den Zeitraum 10 bis 20. Zu jedem Erfassungs- bzw.

Auswertungszeitpunkt wird die Summe der maximal zulässigen Nutzungen der Ressource (Ist-Wert) in der Kurve 23 dargestellt. Da die Nutzungsvorgaben für die Ressourcen zeitbezogen bzw. -abhängig sind und zusammen mit entsprechender Information über den jeweiligen Anfangszeitpunkt und den festgelegten Endzeitpunkt in den Lizenzmodellen abgespeichert werden, kann (auch nachträglich) für jeden beliebigen Auswertungszeitpunkt der entsprechende Soll-Wert ermittelt werden. Vorzugsweise werden die Lizenzmodelle in einer Tabellenform in einer relationalen Datenbank gespeichert (siehe Anhang).

Die Linie 24 in Fig. 8 stellt beispielhaft eine erfaßte Anzahl von Nutzungen der Ressource für den Betrachtungszeitraum dar (Ist-Werte). Diese werden für jede Ressource in Form einer Zeitreihe in der Ressourcendatenbank abgelegt. So kann zu jedem beliebigen Zeitpunkt eine erfindungsgemäße Auswertung unter Berücksichtigung des Ist-Wertes und des Soll-Wertes für den Auswertungszeitpunkt erfolgen.. Wie aus Fig. 8 ersichtlich, erfolgt in dem Beispiel zu den Zeitpunkten 2 und 16 eine Ressourcennutzung über das den Nutzungsvorgaben entsprechende Maß hinaus.

Zu allen anderen Zeitpunkten sind Lizenzreserven vorhanden, die z.B. zu den Zeitpunkten 12 und 13 vier bzw. fünf Nutzungen betragen.

Anhand der dargestellten Zeitreihen für Soll- und Ist-Werte sowie anhand von geeigneten Kenngrößen, wie durchschnittliche Über- oder Unterdeckung oder maximale Über- oder Unterdeckung, kann ein Systemverwalter den Einsatz von Ressourcen in dem Computernetzwerk gemäß den Nutzungsvorgaben abstimmen und optimieren. Es können beispielsweise die Nutzungen von Ressourcen auf Anwendungsrechnern blockiert werden, weitere Lizenzen beschafft werden oder die Nutzung von Ressourcen auf einzelne Anwendungsrechner/Benutzer konzentriert werden. Weiterhin ist es möglich, das Ressourcennutzungsverhalten in dem Computernetzwerk genau zu bestimmen und zu analysieren und maßgeschneiderte Lizenzbedingungen für die sich ergebende Nutzungssituation zu bestimmen. Beispielsweise kann festgestellt werden, daß bestimmte Ressourcen zu einigen Zeitpunkten besonders intensiv genutzt werden (z.B. nur am Monatsende oder Jahresende), während sie zu den übrigen Zeiten nur eine geringe Nutzung haben.

Durch die erfindungsgemäße Auswertung der Ressourceninformation kann eine Verwaltung von Lizenzvereinbarungen (Lizenzverträge, Lizenzscheine) durchgeführt und eine Lizenzüber- bzw. -unterdeckung ermittelt werden. Die Erfindung kann ein schon bestehendes System zum Vertragsmanagement um lizenzrelevante Datenobjekte ergänzen, wie Lizenzbindungsobjekte, vereinbarte Lizenzgrößen, Lizenzschlüssel, u.a., und Funktionalitäten zum Lizenzmanagement. Durch die Gegenüberstellung des vereinbarten maximalen Lizenzbestands über flexibel definierbare Zuordnungsregeln mit den physikalisch, sich in Nutzung befindlichen lizenzierten Ressourcen können so Unter- und Überlizenzierungen ermittelt werden.

Die Zuordnung von erfaßter Ressourceninformation und die Verteilung auf mehreren Nutzungsvorgaben wird anhand des folgenden Beispiels erläutert. Es sei angenommen, daß bei der Erfassung von Ressourceninformation die folgenden Ressourcen ermittelt wurden:

Ressource 1: Typ Software, Name SW1, Version 2, Build 3;
Ressource 2: Typ Software, Name SW1, Version 2, Build 4; und
Ressource 3: Typ Software, Name SW2, Version 1, Build 1.

Die Zuordnungsmatrix der Produktzuordnungsliste enthält folgende Einträge.

| ProductID | Erkannte Ressource | Attribute Version / Build |
|---|---|---|
| Prod1 | SW1 | 2/3 |
| Prod1 | SW1 | 2/4 |
| Prod2 | SW2 | 1/1 |

In dem Beispiel wird weiter angenommen, daß folgende Lizenzscheine in den Lizenzmodellen des Systems hinterlegt sind.

| LicenseNumber | ProductID | Soll-Wert | Ist-Wert |
|---|---|---|---|
| Lic1 | Prod1 | 2 | 0 |
| Lic2 | Prod 1 | 2 | 1 |
| Lic3 | Prod2 | 2 | 1 |

Als Verteilungsstrategie des Verteilungsregelwerks zur Verteilung des ermittelten Ist-Werts für eine Ressource auf mehrere unterschiedliche Lizenzmodelle der Ressource entsprechenden Soll-Werte wird für das Beispiel eine gleichmäßige Verteilung angenommen.

Die Zuordnung der erfaßten Ist-Werte erfolgt folgendermaßen. Zuerst werden die zu der erfaßten Ressourceninformation zugehörigen Produkte und Mengen ermittelt. Im vorliegenden Beispiel wurde die Nutzung von zwei Stücken des Produkts 1 und einem Stück des Produkts 2 erkannt.

Anschließend werden die relevanten Lizenzscheine bzw. Lizenzmodelle für die ermittelten Produkte bestimmt. Im vorliegenden Fall sind die Lizenzen 1, 2 und 3 relevant.

Anschließend erfolgt die Aufteilung einer erkannten mehrfachen Lizenznutzung für eine Ressource auf die Nutzungsvorgaben der verwalteten Produkte. Für Produkt 1 werden im vorliegenden Beispiel bei einer gleichmäßigen Verteilungsstrategie Lizenznutzungen im Umfang von jeweils einem Stück für Lizenzschein 1 und Lizenzschein 2 ermittelt. Für Produkt 2 wird die Nutzung von einem Stück der Lizenz 3 bestimmt. Eine Verteilungsstrategie ist hier nicht nötig, da für Produkt 2 nur ein einziger Lizenzschein mit einer Nutzungsvorgabe vorhanden ist.

Nach der Aktualisierung der Ist-Werte für die erfaßten Ressourcen ergibt sich folgende Situation für die einzelnen Lizenzscheine.

| LicenseNumber | ProductID | Soll-Wert | Ist-Wert |
|---|---|---|---|
| Lic1 | Prod1 | 2 | 1 |
| Lic2 | Prod1 | 2 | 1 |
| Lic3 | Prod2 | 2 | 1 |

Wie aus der letzten Spalte der Tabelle zu entnehmen ist, werden alle drei Lizenzen für die beiden Produkte zu dem dargestellten Zeitpunkt jeweils einfach benutzt. Durch den Vergleich des jeweiligen Ist-Wertes mit dem entsprechenden Soll-Wert für die Lizenz kann nun eine Über-oder Unterdeckung ermittelt werden. Hier ergibt sich die Situation, daß für Produkt 1 zwei weitere Installationen in dem verwalteten Computernetzwerk möglich sind. Produkt 2 kann ein weiteres Mal installiert werden, bevor die Lizenz aufgebraucht ist.

Obwohl die Erfindung anhand der obigen Ausführungsbeispiele erläutert wurde, ist sie selbstverständlich nicht darauf begrenzt und es ergeben sich für den Fachmann viele naheliegende Möglichkeiten diese abzuändern, ohne dabei das Prinzip der Erfindung zu verlassen.

Anhang

1. Schnittstellenbefehle

| Befehle für die Kommunikation zwischen Detection-Agent und -Server/ -Extension-Server | | |
|---|---|---|
| Befehl | GetConfigData | |
| Beschreibung | Anforderung der Konfigurationsdaten für den Detection-Agent vom Detection-Server. | |
| Request-Header | http://<Detectionserver-URI>?GetConfigData& Client=<Rechnername> | |
| Request-Body | Empty | |
| Response-Body | <?xml version=" 1.0"?><br><Configuration><br>  <ConfigData name=""/><br></Configuration> | |
| Mögliche Schlüssel und Werte | Key | | Value |
| | DetectionInterval | Zeitintervall für Software-Detection | 0 (every startup)<br>1 (daily)<br>2 (weekly)<br>4 (monthly)<br>5 (yearly) |

(fortgesetzt)

| Befehle für die Kommunikation zwischen Detection-Agent und -Server/ -Extension-Server | | | |
|---|---|---|---|
| Befehl | GetConfigData | | |
| | DetectionTime | Zeitpunkt für den Start der Software-Detection im festgelegten Intervall | Abhängig vom Wert in Detection-Interval<br><br>0: empty<br><br>1: <Time><br><br>2: <DayOf-Week><Time><br><br>3: <DayOf-Month><Time><br><br>4: <Date><Time><br><br>Formate:<br><br><Time>: hhmm (vierstellig)<br><br><DayOfWeek>: 1<br><br>bis 7 (Montag-Sonntag, einstellig)<br><br><DayOfMonth>: 01 bis 31 (zweistellig)<br><br><Date>: mmdd (vierstellig) |
| | ConfigUpdate | Zeitintervall für die Aktualisierung der Konfig-Daten | 0 (every startup)<br><br>1 (every x min)<br><br>2 (daily)<br><br>3 (weekly)<br><br>4 (monthly)<br><br>5 (yearly) |
| | ConfigUpdateTime | Zeitpunkt für den Start der Aktualisierung der Konfig-Daten im fest-gelegten Intervall | Abhängig vom Wert in ConfigUp-date<br><br>0: empty<br><br>1: <Anz. Minuten><br><br>2: empty<br><br>3: empty<br><br>4: empty<br><br>5: empty |
| | RequestSoftware-Rating | Legt fest, ob ein Software-Rating durch den User stattfinden soll | Timestamp |

| Befehl | SaveDetectionData |
|---|---|
| Beschreibung | Sendet das Ergebnis der Soft- und Hardware-Detection als XML an den Detection-Server zur Speicherung/Weiterverarbeitung. |
| Request-Header | http://<Detectionserver-URI>?SaveDetectionData |
| Request-Body | ```<br><?xml version="1.0"?><br>  <Scanresult><br>    <ScanTime/><br>    <ComputerName/><br>    <LogonDomain/><br>    <LogonServer/><br>    <PageFile/><br>    <Domain/><br>    <MemorySize/><br>    <CPUcount/><br>    <CurrentComputerUser><br>      <UserName/><br>      <FullUserName/><br>``` |

```
          </CurrentComputerUser>
          <OperatingSystem>
            <CreationDate/>
            <ProductKey/>
            <ServicePack/>
            <Type/>
            <Version/>
          </OperatingSystem>
          <Software>
            <Titel/>
            <Version/>
            <CLSID/>
          </Software>
          <Hardware>
            <CPU>
              <Speed/>
              <Type/>
              <SubType/>
            </CPU>
            <Net>
              <CardType/>
              <DNSDomain/>
              <DNSServer/>
              <IPAddress/>
              <MACAddress/>
              <WINSServer/>
            </Net>
            <Partition>
              <FileSystem/>
              <MBFree/>
              <MBTotal/>
              <ID/>
              <Label/>
```

| | |
|---|---|
| | ```<Letter/>```<br>```</Partition>```<br>```<Printer>```<br>```<Driver/>```<br>```<Version/>```<br>```<Key/>```<br>```<Name/>```<br>```<Port/>```<br>```</Printer>```<br>```</Hardware>```<br>```</Scanresult>``` |
| Response-Body | Ergebnismeldung |


| Befehl | RateSoftware |
|---|---|
| Beschreibung | Fordert ein HTML-Dokument mit der Software-Bewertungsfunktionalität vom Detection-Server an. |
| Request-Header | http://<Detectionserver-URI>?<br>RateSoftware&ComputerName=<Computername>&UserName=<Username> |
| Request-Body | Empty |
| Response-Body | Bewertungsbogen als generiertes Html |


| Befehle allgemein (Detection-Server/-Extension-Server) | |
|---|---|
| Befehl | ServerInfo |
| Beschreibung | Gibt Informationen über den Detection-Server/Extension-Server aus. Kann zum Verbindungstest genutzt werden. |
| Request-Header | http://<Detectionserver-URI>?ServerInfo |
| Request- | Empty |
| Body | |
| Response-Body | Serverinformationen als ANSI-Text |

Befehle für die Query-Schnittstelle zur Datenauswertung

| Befehl | GetProductList |
|---|---|
| Beschrei-bung | Gibt eine Liste aller zum übergebenen Zeitpunkt erkannten Software-Produkte als XML zurück. |
| Request-Header | http://<Detectionserver-URI>?GetProductList& Date=<yyyymmdd> |
| Request-Body | Empty |
| Response-Body | `<?xml version="1.0"?>`<br>`<Result>`<br>`<Software>`<br>`<Titel/>`<br>`<Version/>`<br>`<CLSID/>`<br>`</Software>`<br>`</Result>` |

| Befehl | GetComputerList |
|---|---|
| Beschrei-bung | Gibt eine Liste aller zum übergebenen Zeitpunkt erkannten Rechnernamen als XML zurück. |
| Request-Header | http://<Detectionserver-URI>?GetComputerList& Date=<yyyymmdd> |
| Request-Body | Empty |
| Response-Body | `<?xml version="1.0"?>`<br>`<Result>`<br>`<ComputerName/>`<br>`</Result>` |

| Befehl | GetUserList |
|---|---|
| Beschrei-bung | Gibt eine Liste aller zum übergebenen Zeitpunkt erkannten Benutzer als XML zurück. |
| Request-Header | http://<Detectionserver-URI>?GetUserList&Date=<yyyymmdd> |
| Request-Body | Empty |
| Response-Body | ```<?xml version="1.0"?>
  <Result>
    <CurrentComputerUser>
      <UserName/>
      <FullUserName/>
    </CurrentComputerUser>
  </Result>``` |

| Befehl | GetComputerUserList |
|---|---|
| Beschrei-bung | Gibt eine Liste aller zum übergebenen Zeitpunkt erkannten Benutzer mit Zuordnung zum Computer als XML zu-rück. |
| Request-Header | http://<Detectionserver-URI>?GetComputerUserList&Date=<yyyymmdd> |
| Request-Body | Empty |
| Response-Body | ```<?xml version="1.0"?>
  <Resultset>
    <Result>
      <ComputerName/>
      <CurrentComputerUser>
        <UserName/>
        <FullUserName/>
      </CurrentComputerUser>
    </Result>
  </Resultset>``` |

| Befehl | GetSoftwareForComputer |
|---|---|
| Beschrei-<br>bung | Gibt eine Liste der auf einem bestimmten Computer zum übergebenen Zeitpunkt erkannten Software-Produkte als XML zurück. |
| Request-<br>Header | http://<Detectionserver-URI>?GetSoftwareForComputer& ComputerName=<Computername>&Date=<yyymmdd> |
| Request-<br>Body | Empty |
| Response-<br>Body | ```<br><?xml version="1.0"?><br>  <Scanresult><br>    <ScanTime/><br>    <ComputerName/><br>    <LogonDomain/><br>    <LogonServer/><br>    <PageFile/><br>    <Domain/><br>    <MemorySize/><br>    <CPUcount/><br>    <CurrentComputerUser><br>      <UserName/><br>      <FullUserName/><br>    </CurrentComputerUser><br>    <OperatingSystem><br>      <CreationDate/><br>      <ProductKey/><br>      <ServicePack/><br>      <Type/><br>      <Version/><br>    </OperatingSystem><br>    <Software><br>      <Titel/><br>      <Version/><br>``` |

```
                        <CLSID/>
                        </Software>
                        </Scanresult>
```

| Befehl | GetSoftwareForUser |
|---|---|
| Beschrei-bung | Gibt eine Liste der auf einem bestimmten Computer (auf dem der übergebenen User bei der letzten Software-Detection angemeldet war) zum übergebenen Zeitpunkt erkannten Software-Produkte als XML zurück. |
| Request-Header | http://<Detectionserver-URI>?GetSoftwareForUser& User-name=<Username>&Date=<yyyymmdd> |
| Request-Body | Empty |
| Re-sponse-Body | ```
<?xml version="1.0"?>
  <Scanresult>
    <ScanTime/>
    <ComputerName/>
    <LogonDomain/>
    <LogonServer/>
    <PageFile/>
    <Domain/>
    <MemorySize/>
    <CPUcount/>
    <CurrentComputerUser>
      <UserName/>
      <FullUserName/>
    </CurrentComputerUser>
    <OperatingSystem>
      <CreationDate/>
      <ProductKey/>
      <ServicePack/>
      <Type/>
      <Version/>
``` |

| | |
|---|---|
| | `</OperatingSystem>`<br>`<Software>`<br>`  <Titel/>`<br>`  <Version/>`<br>`  <CLSID/>`<br>`</Software>`<br>`</Scanresult>` |

| | |
|---|---|
| Befehl | GetSoftwareDetectionValues |
| Beschrei-bung | Gibt eine Liste aller erkannten Software-Produkte mit einem Summenwert (auf den übergebenen Zeitpunkt bezogen) als XML zurück. |
| Request-Header | http://<Detectionserver-URI>? GetSoftwareDetectionValues& Date=<yyyymmdd> |
| Request-Body | Empty |
| Response-Body | `<?xml version="1.0"?>`<br>`  <Result>`<br>`    <Software>`<br>`      <Titel/>`<br>`      <Version/>`<br>`      <CLSID/>`<br>`      <Count/>`<br>`    </Software>`<br>`    <OperatingSystem>`<br>`      <Type/>`<br>`      <Version/>`<br>`      <Count/>`<br>`    </OperatingSystem>`<br>`  </Result>` |

| Befehl | GetHardwareDetectionForComputer |
|---|---|
| Beschrei- | Gibt eine Liste aller erkannten Hardware-Komponenten zum |

| bung | übergebenen Computer (auf den übergebenen Zeitpunkt bezogen) als XML zurück. |
|------|------|
| Request-Header | http://<Detectionserver-URI>?GetDetectionValues& ComputerName=<Computername>&Date=<yyyymmdd> |
| Request-Body | Empty |
| Response-Body | ```xml<br><?xml version="1.0"?><br>  <Result><br>    <ScanTime/><br>    <ComputerName/><br>    <LogonDomain/><br>    <LogonServer/><br>    <PageFile/><br>    <Domain/><br>    <MemorySize/><br>    <CPUcount/><br>    <CurrentComputerUser><br>      <UserName/><br>      <FullUserName/><br>    </CurrentComputerUser><br>    <Hardware><br>      <CPU><br>        <Speed/><br>        <Type/><br>        <SubType/><br>      </CPU><br>      <Net><br>        <CardType/><br>        <DNSDomain/><br>        <DNSServer/><br>        <IPAddress/><br>        <MACAddress/><br>        <WINSServer/><br>``` |

```
            </Net>
            <Partition>
              <FileSystem/>
              <MBFree/>
              <MBTotal/>
              <ID/>
              <Label/>
              <Letter/>
            </Partition>
            <Printer>
              <Driver/>
              <Version/>
              <Key/>
              <Name/>
              <Port/>
            </Printer>
          </Hardware>
        </Result>
```

```
            <UserName/>
            <FullUserName/>
          </CurrentComputerUser>
          <Software>
            <Titel/>
            <Version/>
            <CLSID/>
            <Rating/>
          </Software>
        </SoftwareRatingResult>
```

| Befehl | GetExtendedRatingResult |
|--------|-------------------------|
| Beschrei-bung | Gibt die Ergebnisdaten aus den selbst definierten Rating-Attributen zum übergebenen PC als XML zurück. |
| Request-Header | http://<Detectionserver-URI>? GetExtendedRatingRe-sult&ComputerName=<Computername>, oder http://<DetectionserverURI>?GetExtendedRatingResult&UserName=<Benutzername> |
| Request-Body | Empty |
| Respon-se-Body | ```<?xml version="1.0"?>``` <ExtendedRatingResult> <SoftwareRatingTime/> <ComputerName/> <CurrentComputerUser> <UserName/> <FullUserName/> </CurrentComputerUser> <ExtendedRating name=""/> </ExtendedRatingResult> |

Befehle für die Konfiguration (Admin-Tool)

| Befehl | ChangeData |
|---|---|
| Beschreibung | Löschen, Ändern und Anlegen von Datensätzen gemäß des übergebenen XML-Dokuments (Datenänderungen nur an Konfigurationsdaten-Tabellen) |
| Request-Header | http://<Detectionserver-URI>?ChangeData |
| Request-Body | `<?xml version="1.0"?>`<br>`<Table name="">`<br>`<Dataset action="INSERT\|UPDATE\|DELETE">`<br>`<Value name=""/>`<br>`</Dataset>`<br>`</Table>` |
| Response-Body | Ergebnismeldung |

| Befehl | ReadData |
|---|---|
| Beschreibung | Auslesen von Datensätzen aus Datenbanktabellen gemäß des übergebenen XML-Dokuments. |
| Request-Header | http://<Detectionserver-URI>?ReadData |
| Request-Body | `<?xml version="1.0"?>`<br>`<Table name="">`<br>`<Key name=""/>`<br>`</Table>` |
| Response-Body | `<?xml version="1.0"?>`<br>`<Table name="">`<br>`<Dataset>`<br>`<Value name=""/>`<br>`</Dataset>`<br>`</Table>` |

2. Tabellendefinitionen

| Lizenzscheinverwaltung | | |
|---|---|---|
| Datenstruktur | Lizenzschein | |
| | Schlüssel | Beschreibung |
| LicenseNumber | X | Fortlaufende Nummer, welche einen Lizenzschein identifiziert |
| TimeSegmentNumber | X | Zeitsegmentnummer, welche in Kombination zur Lizenzscheinnummer einen Datensatz eindeutig identifiziert |
| ForeignType | | Fremdobjekttyp, dient zur Ermittlung der Art der Verknüpfung (Festwerte) |
| ForeignNumber | | Fremdobjektnummer, welche die Verbindung zum Produktkatalog herstellt |
| LicenseCount | | Lizenzanzahl, gemäß Lizenzabkommen erworbene Menge |
| LicenseUnit | | Lizenzeinheit, Dimension der Lizenzzahl |
| ValidFrom | | Gültig von, bei befristeten Lizenzscheinen der Laufzeitbeginn |
| ValidTo | | Gültig bis, bei befristeten Lizenzscheinen das Laufzeitende |
| InUseLicenseCount | | Lizenzzahl, gemäß Scan ermittelte Lizenzmenge |
| TimeStamp | | Zeitpunkt, der Datenänderung |
| ... | | weitere Attribute |

| Produktkatalog | | |
|---|---|---|
| Datenstruktur | Produktzuordnung | |
| | Schlüssel | Beschreibung |
| ProductId | X | Fortlaufende Nummer, welche ein Produkt eindeutig identifiziert |
| ScanSoftware | X | Ermittelte Software laut Scan |
| ... | | weitere Attribute |

| Datenstruktur | Produktkatalog | |
|---|---|---|
| | Schlüssel | Beschreibung |
| Productid | X | Fortlaufende Nummer, welche ein Produkt eindeutig identifiziert |
| HashValues | | Identifizierungskennzahlen(Fingerprints), z.B. MD5, CLSID etc. |
| ProdAttributes | | Div. Attribute z.B. Kennzeichen für "Ist Update", "Update möglich" etc. |
| ... | | weitere Attribute |

Zum Produktkatalog gehören weitere Datenstrukturen, z.B. Bundledefinition, Produktfamiliendefinition, welche gemäß Fremdschlüsselbeziehung in Verbindung stehen

| Produktkatalog | | Struktur Erweiterung |
|---|---|---|
| ProductId | 1 : N | ProductId |
| | | OwnKey |
| ... | | weitere Attribute |

| Datenstruktur | Produktgrößen | |
|---|---|---|
| | Schlüssel | Beschreibung |
| ProductId | X | Fortlaufende Nummer, welche ein Produkt eindeutig identifiziert |
| TimeStamp | X | Zeitpunkt der Ermittlung des Detectiontools |
| LicenseCount | | Lizenzanzahl, gemäß Detectiontool ermittelter Wert |
| LicenseUnit | | Lizenzeinheit, Dimension der Lizenzzahl |
| ... | | weitere Attribute |

**Patentansprüche**

1. Verfahren zum Verwalten von Ressourcen in einem Computersystem mit mindestens einem Anwendungsrechner (1), wobei das Verfahren die Schritte umfasst:

   Erfassen von Ressourceninformation bezüglich der Nutzung von auf einem Anwendungsrechner (1) vorgesehenen Ressourcen,
   Sammeln der Ressourceninformation von Anwendungsrechnern (1) und Erstellen einer Ressourcendatenbank (6) über die Nutzung von auf den Anwendungsrechnern (1) installierten Ressourcen, die zumindest die erfaßte Ressourceninformation für die Anwendungsrechner (1) und den Zeitpunkt der Erfassung umfaßt,
   Ermitteln von Ressourceninformation für eine vorgegebene Ressource aus der Ressourcendatenbank (6) für einen vorgegebenen Auswertezeitpunkt als Ist-Wert für die auszuwertende Ressource,
   Ermitteln eines Soll-Wertes für die auszuwertende Ressource für den Auswertezeitpunkt anhand von zeitbezogenen Nutzungsvorgaben für Ressourcen, und
   Auswerten der Ressourceninformation für die auszuwertende Ressource und den Auswertezeitpunkt durch Vergleich des Ist-Wertes mit dem Soll-Wert der Ressource.

2. Verfahren nach Anspruch 1, wobei die auf dem jeweiligen Anwendungsrechner (1) installierten Hardware- und/oder Softwarekomponenten als Ressourcen ermittelt und maximal zulässige Installationsanzahlen für Ressourcen in dem Computersystem als Nutzungsvorgaben herangezogen werden.

3. Verfahren nach Anspruch 1 oder 2, wobei eine Betriebssystemdatenbank des Anwendungsrechners (1) ausgewertet wird, um installierte Hardware- und/oder Softwarekomponenten zu ermitteln.

4. Verfahren nach zumindest einem der vorgehenden Ansprüche, wobei Eigenschaften von installierten Hardware- und/oder Softwarekomponenten ausgewertet werden, um den Typ einer erfaßten Ressource zu ermitteln.

5. Verfahren nach zumindest einem der vorgehenden Ansprüche, wobei die Ressourceninformation eine Anzahl der Benutzer für eine Ressource zu einem Erfassungszeitpunkt umfaßt.

6. Verfahren nach zumindest einem der vorgehenden Ansprüche, wobei die Erfassung von Ressourceninformation nach dem Start des Anwendungsrechners (1) und/oder in vorgegebenen Abständen erfolgt.

7. Verfahren nach zumindest einem der vorgehenden Ansprüche, mit einem Schritt zur Abfrage von Konfigurationsinformation, die Information über die Art und/oder über den Zeitpunkt der zu ermittelnden Ressourceninformation umfaßt.

8. Verfahren nach zumindest einem der vorgehenden Ansprüche, mit einem Schritt zur Befragung eines Benutzers des Anwendungsrechners (1) bezüglich einer auf dem Anwendungsrechner (1) installierten Ressource.

9. Verfahren nach Anspruch 8, wobei anhand von zuvor erfaßter Information über auf dem Anwendungsrechner installierte Ressourcen ein Benutzerfragebogen erstellt wird.

10. Verfahren nach Anspruch 9, wobei der erstellte Benutzerfragebogen einen Zeitstempel aufweist, und der Anwendungsrechner (1) den Zeitstempel auswertet, um festzustellen, ob eine Benutzerbefragung anhand des Benutzerfragebogens bereits erfolgt ist.

**11.** Verfahren nach zumindest einem der vorgehenden Ansprüche, wobei die Ressourcendatenbank (6) auf einem Erfassungsrechner (2) vorgesehen ist, der die Ressourceninformation von den Anwendungsrechnern (1) sammelt, die Ressourcendatenbank (6) erstellt und aktualisiert, und für eine vorgegebene Ressource und einen vorgegebenen Auswertezeitpunkt die Ressourceninformation als Ist-Wert für die auszuwertende Ressource aus der Ressourcendatenbank (6) ermittelt.

**12.** Verfahren nach zumindest einem der vorgehenden Ansprüche, wobei die Auswertung der Ressourceninformation auf einem Verwaltungsrechner (3) erfolgt, der mittels eines Kommunikationsnetzwerkes (4) mit dem zumindest einen Anwendungsrechner (1) und/oder dem Erfassungsrechner (2) verbunden ist.

**13.** Verfahren nach zumindest einem der vorgehenden Ansprüche, wobei die Übertragung von Ressourceninformation zwischen dem zumindest einen Anwendungsrechner (1), dem Verwaltungsrechner (3) und/oder dem Erfassungsrechner (2) über ein Kommunikationsnetzwerk (4) in einem XML-Datenformat erfolgt.

**14.** Verfahren nach zumindest einem der vorgehenden Ansprüche, mit einem Ressourcenfilterschritt zum Filtern von Information über erfaßte Ressourcen, wobei nur Ressourceninformation bezüglich einer Positivliste für Ressourcen das Filter passieren kann und/oder Ressourceninformation bezüglich einer Negativliste für Ressourcen vom Filter herausgefiltert wird.

**15.** Verfahren nach zumindest einem der vorgehenden Ansprüche, mit einem Ressourcenzuordnungsschritt zum Zuordnen von Information für erfaßte Ressourcen zu vorgegebenen Standard-Ressourcen, insbesondere anhand von erfaßten Eigenschaften der Ressourcen.

**16.** Verfahren nach zumindest einem der vorgehenden Ansprüche, mit einem Schritt zur Erstellung eines Lizenzmodells (15) für eine Ressource, das die maximal zulässige Anzahl von Installationen oder Benutzern für die Ressource in einem bestimmten Zeitraum in dem Computersystem oder einem vorgegebenen Teil des Computersystems als Nutzungsvorgabe angibt.

**17.** Verfahren nach zumindest einem der vorgehenden Ansprüche, wobei für die auszuwertende Ressource mehrere Nutzungsvorgaben mit unterschiedlichen Gültigkeitszeiträumen vorgesehen sind, und mit einem Schritt zur Verteilung des ermittelten Ist-Wertes für die auszuwertende Ressource auf mehrere den Nutzungsvorgaben entsprechende Soll-Werte, insbesondere in Form einer gleichmäßigen Verteilung oder einer historischen Verteilung anhand der Gültigkeitszeiträume der zugehörigen Nutzungsvorgaben.

**18.** Verfahren nach zumindest einem der vorgehenden Ansprüche, wobei die Auswertung der Ressourceninformation für einen vorgegebenen Teil des Computersystems erfolgt, insbesondere für Organisationselemente des das Computersystem betreibenden Unternehmens.

**19.** Verfahren nach zumindest einem der vorgehenden Ansprüche, wobei die Auswertung der Ressourceninformation im Falle, daß ein ermittelter Ist-Wert einer Ressource den zugehörigen Soll-Wert der Ressource überschreitet, das Absenden einer Nachricht an einen Systemverwalter und/oder das Deaktivieren eines entsprechenden Teils der überschüssigen Ressourcen auf den Anwendungsrechnern (1) umfaßt.

**20.** Vorrichtung zum Verwalten von Ressourcen in einem Computersystem mit mindestens einem Anwendungsrechner (1), wobei die Vorrichtung aufweist:

Ressourcenerfassungsmittel (10) zum Erfassen von Information bezüglich der Nutzung von auf einem Anwendungsrechner (1) vorgesehenen Ressourcen,
Datenbankmittel zum Sammeln der Ressourceinformation von Anwendungsrechnern (1) und zum Erstellen einer Ressourcendatenbank (6) über die Nutzung von auf den Anwendungsrechnern (1) installierten Ressourcen, die zumindest die erfaßte Ressourceninformation für die Anwendungsrechner (1) und den Zeitpunkt der Erfassung umfaßt,
Ist-Wert-Ermittlungsmittel zum Ermitteln von Ressourceninformation für eine vorgegebene Ressource aus der Ressourcendatenbank (6) für einen vorgegebenen Auswertezeitpunkt als Ist-Wert für die auszuwertende Ressource.
Soll-Wert-Berechnungsmittel zum Ermitteln eines Soll-Wertes für die auszuwertende Ressource für den Auswertezeitpunkt anhand von zeitbezogenen Nutzungsvorgaben für Ressourcen, und
Auswertemittel zum Auswerten der Ressourceninformation für die auszuwertende Ressource und den Auswertezeitpunkt durch Vergleich des Ist-Wertes mit dem Soll-Wert der Ressource.

21. Vorrichtung nach Anspruch 20, wobei die Ressourcenerfassungsmittel (10) zum Detektieren von installierten Hardwarekomponenten, Softwarekomponenten und/oder einer Anzahl von Benutzern einer Ressource auf den Anwendungsrechnern (1) zu einem Erfassungszeitpunkt ausgebildet sind.

22. Vorrichtung nach Anspruch 20 oder 21, wobei die Ressourcenerfassungsmittel (10) eine Zeitsteuereinheit aufweisen, welche die Erfassung von Ressourceninformation nach dem Start des Anwendungsrechners (1) und/oder in vorgegebenen Abständen durchführt.

23. Vorrichtung nach zumindest einem der Ansprüche 20 bis 22, wobei die Ressourcenerfassungsmittel (10) eine Konfigurationseinheit aufweisen, welche Konfigurationsinformation über die Art und/oder über den Zeitpunkt der zu ermittelnden Ressourceninformation abfragt.

24. Vorrichtung nach zumindest einem der Ansprüche 20 bis 23, wobei die Ressourcenerfassungsmittel (10) Mittel zur Befragung eines Benutzers des Anwendungsrechners (1) bezüglich einer auf dem Anwendungsrechner (1) installierten Ressource aufweisen.

25. Vorrichtung nach zumindest einem der Ansprüche 20 bis 24, wobei die Ist-Wert-Ermittlungsmittel ausgebildet sind, Daten der Ressourcendatenbank (6) bezüglich ermittelter Ressourcen für einen vorgegebenen Anwendungsrechner (1), einen vorgegebenen Benutzer, einen vorgegebenen Teil des Computernetzwerkes, oder das gesamte Computernetzwerk zu ermitteln.

26. Vorrichtung nach zumindest einem der Ansprüche 20 bis 25, mit einem Erfassungsrechner (2), der die Ressourceninformation von den Anwendungsrechnern (1) sammelt und die Ressourcendatenbank (6) erstellt und aktualisiert, wobei die Anwendungsrechner (1) und der Erfassungsrechner (2) mit einem Kommunikationsnetzwerk (4) verbunden sind.

27. Vorrichtung nach Anspruche 26, mit einem mit dem Kommunikationsnetzwerk (4) verbundenen Zwischenrechner (5) zum Weiterleiten von Anfragen, Nachrichten, und/oder Daten zwischen den Anwendungsrechnern (1) und dem Erfassungsrechner (2).

28. Vorrichtung nach zumindest einem der Ansprüche 20 bis 27, mit einem Verwaltungsrechner (3) zur Auswertung der Ressourceninformation, der mit dem Kommunikationsnetzwerk (4) verbunden ist.

29. Vorrichtung nach zumindest einem der Ansprüche 20 bis 28, mit Ressourcenfiltermitteln (12) zum Filtern von Information über erfaßte Ressourcen, die derart ausgebildet sind, daß nur Ressourceninformation bezüglich in einer Positivliste aufgeführter Ressourcen das Filter passieren kann und/oder Ressourceninformation bezüglich in einer Negativliste aufgeführter Ressourcen vom Filter herausgefiltert wird.

30. Vorrichtung nach zumindest einem der Ansprüche 20 bis 29, wobei die Auswertemittel eine Ressourcenzuordnungseinrichtung (13) zum Zuordnen von Information für erfaßte Ressourcen zu vorgegebenen Standard-Ressourcen aufweisen.

31. Vorrichtung nach zumindest einem der Ansprüche 20 bis 30, wobei die Auswertemittel eine Lizenzmodelerstellungseinrichtung zur Erstellung eines Lizenzmodells (15) für eine Ressource aufweisen, wobei zur Erstellung eines Lizenzmodells (15) Lizenzmodellprototypen mit vorgegebenen typischen Lizenzgrößen vorgesehen sind, wie eine Zuordnung einer Lizenz zu einem Benutzer oder zu einem Anwendungsrechner (1).

32. Vorrichtung nach zumindest einem der Ansprüche 20 bis 31, wobei die Auswertemittel ein Verteilungsregelwerk zur Verteilung des ermittelten Ist-Wertes für eine Ressource auf mehrere Soll-Werte aufweisen, die unterschiedlichen Nutzungsvorgaben der Ressource entsprechen.

33. Vorrichtung nach zumindest einem der Ansprüche 20 bis 32, wobei die Auswertemittel eine Steuerungseinrichtung aufweisen, welche nach vorgegebenen Regeln eine Aktion auslöst, falls ein ermittelter Ist-Wert für eine Ressource den zugehörigen Soll-Wert der Ressource überschreitet.

**34.** Vorrichtung nach zumindest einem der Ansprüche 20 bis 33, wobei die Auswertemittel als SAP-Anwendung implementiert sind.

**35.** Verwendung der Vorrichtung nach Anspruch 20 bis 34 zur Verwaltung von Lizenzen für Ressourcen in dem Computersystem, insbesondere für Hardwarekomponenten, Softwarekomponenten, elektronische Dokumente, digitale Bilder, digitale Filme und/oder Audiodateien.

**36.** Computerlesbares Medium mit auf dem Medium vorgesehenen Programmcodemitteln zum Ausführen des Verfahrens nach zumindest einem der Ansprüche 1 bis 19.

**37.** Computer-Program-Produkt mit auf einem maschinenlesbaren Träger gespeichertem Programmcode zur Durchführung des Verfahrens nach zumindest einem der Ansprüche 1 bis 19, wenn das Programmprodukt auf einem Rechner abläuft.

Fig. 1

EP 1 607 824 A2

Start

Abfrage Konfig.-Daten
vom Erfassungsrechner — 100

Konfig-
Update

160
Soll Erfassung
oder Konfig-Update
durchgeführt
werden?

Erfassung

105
Soll Ressourcenerfassung
durchgeführt werden?

Nein

130
Soll Benutzerbefragung
durchgeführt werden?

Nein

Ja

Ja

Auswertung der
Registry-Einträge — 110

Benutzerbefragung als
generiertes HTML-Dokument
vom Erfassungsrechner
abrufen und anzeigen — 135

155

Timer

Auswertung der
Datei-Informationen
detektierter Anwendungen — 115

Benutzer-Aktion — 140

XML generieren und an
Erfassungsrechner senden — 120

Bearbeitete Benutzerbefragung an
den Erfassungsrechner senden — 145

Lokal gespeicherten
Erfassungs-Zeitstempel
aktualisieren — 125

Lokal gespeicherten
Benutzerbefragungs-Zeitstempel
aktualisieren — 150

Fig. 2

37

EP 1 607 824 A2

| | | | | Web-GUI | GUI |
|---|---|---|---|---|---|
| Client-Kommunikation (http) | Zwischenrechner-Kommunikation (http) | WMI | Query-Schnittstelle (http) | Web-GUI-Schnittstelle | GUI-Schnittstelle |
| Erfassungs-Server | | | | | |
| Datenbankschnittstelle | | | Filesystem | | |
| DB | | | | | |

Fig. 3

| Client-Kommunikation (http) | Server-Kommunikation (http) | WMI |
|---|---|---|
| Zwischenrechner-Server | | |
| Filesystem | | |

Fig. 5

Fig. 4

Fig. 6

EP 1 607 824 A2

Fig. 7

Fig. 8